(19) Europäisches Patentamt
European Patent Office
Office européen des brevets

(11) **EP 4 000 018 B1**

(12) **EUROPÄISCHE PATENTSCHRIFT**

(45) Veröffentlichungstag und Bekanntmachung des Hinweises auf die Patenterteilung:
**23.10.2024 Patentblatt 2024/43**

(21) Anmeldenummer: **20731471.7**

(22) Anmeldetag: **09.06.2020**

(51) Internationale Patentklassifikation (IPC):
**G06Q 10/20** *(2023.01)* **G06Q 10/0631** *(2023.01)*
**G05B 23/02** *(2006.01)* **G06Q 50/04** *(2012.01)*

(52) Gemeinsame Patentklassifikation (CPC):
**G06Q 10/20; G05B 23/0283; G06Q 10/0631; G06Q 50/04;** Y02P 90/30; Y02P 90/80

(86) Internationale Anmeldenummer:
**PCT/EP2020/065918**

(87) Internationale Veröffentlichungsnummer:
**WO 2021/008782 (21.01.2021 Gazette 2021/03)**

(54) **VORAUSSCHAUENDE WARTUNG FÜR EINE VORRICHTUNG IN DER LEBENSMITTELINDUSTRIE MITHILFE EINES DIGITALEN ZWILLINGS UND OPTIMIERTE PRODUKTIONSPLANUNG**

PREDICTIVE MAINTENANCE FOR A DEVICE IN THE FOOD INDUSTRY BY MEANS OF A DIGITAL TWIN, AND OPTIMIZED PRODUCTION PLANNING

MAINTENANCE PRÉVISIONNELLE POUR UN DISPOSITIF DE L'INDUSTRIE DES DENRÉES ALIMENTAIRES À L'AIDE D'UN JUMEAU NUMÉRIQUE ET PLANIFICATION DE PRODUCTION OPTIMISÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.07.2019 DE 102019119352**

(43) Veröffentlichungstag der Anmeldung:
**25.05.2022 Patentblatt 2022/21**

(73) Patentinhaber: **KRONES AG**
**93073 Neutraubling (DE)**

(72) Erfinder:
• **ALBRECHT, Thomas**
**93073 Neutraubling (DE)**
• **SCHINDLER, Lukas**
**93073 Neutraubling (DE)**
• **BOETTCHER, Benedikt**
**93073 Neutraubling (DE)**

(74) Vertreter: **Grünecker Patent- und Rechtsanwälte PartG mbB**
**Leopoldstraße 4**
**80802 München (DE)**

(56) Entgegenhaltungen:
EP-A1- 3 428 756 EP-A1- 3 454 150
EP-A2- 2 837 984 WO-A1-2019/067630
DE-A1- 102015 211 344 DE-A1- 102016 124 083
US-A1- 2017 185 970 US-A1- 2018 164 759

• KESKI-VALKAMA TERO ED - ABRAHAM JIBI ET AL: "A Simulator for Event-oriented Data in Flexible Assembly System Fault Prediction", PROCEDIA COMPUTER SCIENCE, vol. 119, 1 November 2017 (2017-11-01), pages 121 - 130, XP085291182, ISSN: 1877-0509, DOI: 10.1016/J.PROCS.2017.11.168
• HAIBO HE: "ADASYN: Adaptive synthetic sampling approach for imbalanced learning", PROCEEDINGS OF THE 2008 IEEE INTERNATIONAL JOINT CONFERENCE ON NEURAL NETWORKS (IJCNN'08), vol. 10, 1 June 2008 (2008-06-01), pages 1322 - 1328, XP093152073, ISBN: 978-1-4244-1821-3, Retrieved from the Internet <URL:https://ieeexplore.ieee.org/stampPDF/getPDF.jsp?tp=&arnumber=4633969&ref=> DOI: 10.1109/IJCNN.2008.4633969

- ZHANG CHI ET AL: "Equipment Health Indicator Learning Using Deep Reinforcement Learning", 18 January 2019, MACHINE LEARNING AND KNOWLEDGE DISCOVERY IN DATABASES; [LECTURE NOTES IN COMPUTER SCIENCE; LECT.NOTES COMPUTER], SPRINGER INTERNATIONAL PUBLISHING, CHAM, PAGE(S) 488 - 504, ISBN: 978-3-030-10996-7, ISSN: 0302-9743, XP047679629
- GILABERT E ET AL: "Intelligent automation systems for predictive maintenance: A case study", ROBOTICS AND COMPUTER INTEGRATED MANUFACTURING, ELSEVIER SCIENCE PUBLISHERS BV., BARKING, GB, vol. 22, no. 5-6, 1 October 2006 (2006-10-01), pages 543 - 549, XP025148613, ISSN: 0736-5845, [retrieved on 20061001], DOI: 10.1016/J.RCIM.2005.12.010
- BHOOPATHI RAPOLU: "Wie K?nstliche Intelligenz (KI) die Bahnindustrie erobert - Bringing artificial intelligence (AI) to the rail industry", SIGNAL UND DRAHT: SIGNALLING & DATACOMMUNICATION, vol. 108, no. 5, 10 May 2016 (2016-05-10), DE, pages 37 - 41, XP055271632, ISSN: 0037-4997

**Beschreibung**

Die Erfindung betrifft ein Verfahren zum automatischen Erkennen einer Betriebsstörung einer Vorrichtung in der Lebensmittelindustrie oder der Getränkemittelindustrie, insbesondere zur vorausschauenden Wartung gemäß dem Oberbegriff des Anspruchs 1, ein System zum automatischen Erkennen einer Betriebsstörung gemäß dem Oberbegriff des Anspruchs 9, einen maschinellen Lernalgorithmus zum automatischen Erkennen einer Betriebsstörung gemäß dem Oberbegriff des Anspruchs 12, ein Verfahren zum Bestimmen eines optimierten Produktionsplans gemäß dem Oberbegriff des Anspruchs 13 und ein System zum Bestimmen eines optimierten Produktionsplans gemäß dem Oberbegriff des Anspruchs 15.

**Stand der Technik**

Das Erkennen eines bevorstehenden Störfalls einer Vorrichtung ist wichtig, um rechtzeitig Wartungsmaßnahmen (wie zum Beispiel das Austauschen eines Verschleißteils oder die Reinigung einer Komponente der Vorrichtung) vorzunehmen, um den Eintritt des Störfalls (wie zum Beispiel eines Lagerschadens der Vorrichtung) zu vermeiden. So ist es oft der Fall, dass die Ursache (wie beispielsweise eine verringerte Schmierwirkung oder erhöhte Reibung) für den Störfall bereits für einen gewissen Zeitraum vorliegt, der Störfall aber erst zu einem späteren Zeitpunkt eintritt. Beispielsweise kann ein verunreinigtes Kugellager einer Vorrichtung noch über einen gewissen Zeitraum weiter benutzt werden, bevor es zu einer Beschädigung des Kugellagers und/oder zu einem Stillstand der Vorrichtung kommt. Daher ist es wichtig, bereits frühzeitig das ursächliche Ereignis (wie zum Beispiel eine erhöhte Reibung), das zu einem zukünftigen Störfall führt, zu erkennen, um den Eintritt des Störfalls zu verhindern. Das Erkennen einer solchen Betriebsstörung und die daraus resultierende, rechtzeitige Vornahme von Wartungsmaßnahmen ist auch bekannt als vorausschauende Wartung.

Aktuell beruhen Techniken für die vorausschauende Wartung auf menschlichen Erfahrungswerten (wie z.B. den Erfahrungswerten eines Betreibers der Anlage), basierend auf denen vorausschauende Wartungsmaßnahmen durchgeführt werden. So erkennt beispielsweise ein erfahrener Mitarbeiter, dass gewisse Ausgangssignale einer Vorrichtung, wie Temperatur, oder Bewegungsabläufe der Vorrichtung ungewöhnlich sind und bestimmt basierend auf seiner Erfahrung eine Wartungsmaßnahme für die Vorrichtung.

Alternativ ist es möglich die vorausschauende Wartung basierend auf Betriebsdaten einer Vorrichtung (wie zum Beispiel den Ausganssignalen der Sensoren der Vorrichtung), vorzunehmen. Dazu werden aufgezeichnete Betriebsdaten bereits aufgetretener Betriebsstörungen der Vorrichtung zum Trainieren eines maschinellen Lernalgorithmus eingesetzt. Dieser trainierte maschinelle Lernalgorithmus erhält dann im realen Betrieb aktuelle Betriebsdaten der Vorrichtung und kann so für das Erkennen einer Betriebsstörung der Vorrichtung genutzt werden.

Um ein präzises Erkennen für alle (oder annähernd alle) potentiell mögliche Betriebsstörungen der Vorrichtung zu ermöglichen, müssen diese Betriebsstörungen zuvor an der Vorrichtung aufgetreten sein, damit die entsprechenden Betriebsdaten (die der jeweiligen Betriebsstörung entsprechen) beim Trainieren des maschinellen Lernalgorithmus verwenden werden können. Wenn es keine (oder nur wenige) Betriebsdaten für eine bestimmte Betriebsstörung gibt, kann der maschinelle Lernalgorithmus nicht (oder nur schlecht) darauf trainiert werden diese bestimmte Betriebsstörung zu erkennen.

Manche Betriebsstörungen treten jedoch nur sehr selten auf. Des Weiteren führen Betriebsstörungen oft zu Schäden an der betroffenen Vorrichtung und das Beheben einer Betriebsstörung ist mit Aufwand und Kosten verbunden. Das bewusste herbeiführen von Betriebsstörungen zum Erzeugen von entsprechenden Betriebsdaten (um diese dann für das Training des maschinellen Lernalgorithmus zu verwenden) ist zwar grundsätzlich möglich, jedoch ebenfalls mit hohem Aufwand und Kosten verbunden. Das heißt, dass zum präzisen Erkennen einer Betriebsstörung zuvor genügend Betriebsdaten zu allen möglichen Betriebsstörungen aufgezeichnet werden müssen, diese Betriebsdaten, aber nur schwer oder nur unter hohem Kostenaufwand erzeugt werden können.

Ein weiterer Nachteil im Stand der Technik ist es, dass viele zusätzliche Sensoren (zusätzlich zu den für den bestimmungsgemäßen Betrieb der Vorrichtung ohnehin vorhandenen Sensoren) an der Vorrichtung angebracht werden müssen, um ein präzises Erkennen einer bevorstehender Betriebsstörung treffen zu können. Diese zusätzlichen Sensoren erfassen zusätzliche Betriebsdaten, die es ermöglichen, trotz des nur seltenen Auftretens mancher Betriebsstörungen, das erkennen einer Betriebsstörung zu verbessern.

Die von den zusätzliche Sensoren erzeugten Betriebsdaten verbessern zwar wie vorgehend beschrieben die Erkennung von Betriebsstörungen, jedoch müssen die durch die zusätzlichen Sensoren erfassten zusätzlichen Betriebsdaten übertragen, verarbeitet und gespeichert werden, was mit einem zusätzlichen Aufwand verbunden ist (so wird beispielsweise zusätzlicher Speicher und zusätzliche Rechenkraft benötigt) und zu einer Verzögerung des Erkennens der Betriebsstörung führen kann. Insbesondere kann durch diese Verzögerung (beding durch die zusätzlichen Betriebsdaten) die erforderliche zeitnahe Reaktion auf die Betriebsstörung verloren gehen. Jedenfalls ist diese Verzögerung unerwünscht, da die, die Betriebsstörung verhindernden Maßnahmen erst verzögert eingeleitet werden können.

Des Weiteren schränken die zusätzlichen Sensoren unter Umständen die Funktion oder Anwendung der Vorrichtung ein und müssen aufwendig appliziert werden. Ein Weiteres Problem ist es geeignete Stellen für das Anbringen der zusätzlichen Sensoren zu finden, so dass diese für das Erkennen einer bevorstehenden Betriebsstörung möglichst informative Betriebsdaten erfassen (die also ein möglichst präzises Erkennen einer Betriebsstörung ermöglichen).

EP 3 428 756 A1 offenbart ein Verfahren zum Überwachen der Integrität eines industriellen Automatisierungssystems, insbesondere um Fremdzugriffe auf Automatisierungssysteme zu erkennen. Dabei ist es möglich, dass eine Referenz basierend auf einem vorgegebenen deterministischen Modell und als Funktion der Zustandsdaten bestimmt wird. Insbesondere wenn ein Simulationsmodell des Automatisierungssystems, das auch als digitaler Zwilling bezeichnet wird, vorliegt, so kann das Simulationsmodell im laufenden Betrieb als Referenz verwendet werden. Das Verfahren umfasst das Erhalten von Referenz-Zustandsdaten des Automatisierungssystems in einer Lernphase. Die Lernphase wird im Zusammenhang mit einem überwachten Betrieb durchgeführt. Eine Vernetzung zwischen unterschiedlichen Automatisierungssystemen kann ausgenutzt werden, um die Kompromittierung eines einzelnen Automatisierungssystems aus dieser Gruppe von Automatisierungssystemen durch einen Vergleich mit den übrigen Automatisierungssystemen zu erkennen.

**Aufgabe**

Es ist somit die Aufgabe der Erfindung, ein verbessertes Verfahren zum automatischen Erkennen einer Betriebsstörung für eine Vorrichtung in der Lebensmittelindustrie oder der Getränkemittelindustrie bereitzustellen, sowie ein entsprechendes System und einen entsprechenden maschinellen Lernalgorithmus.

**Lösung**

Diese Aufgabe wird erfindungsgemäß durch ein Verfahren gemäß Anspruch 1, ein System gemäß Anspruch 9 und einen maschinellen Lernalgorithmus gemäß Anspruch 12 gelöst.

Bevorzugte Ausführungsformen werden durch die abhängigen Ansprüche beschrieben.

Eine Ausführungsform der Erfindung betrifft ein Verfahren zum automatischen Erkennen einer Betriebsstörung einer Vorrichtung in der Lebensmittelindustrie oder der Getränkemittelindustrie, insbesondere zur vorausschauenden Wartung. Dabei umfasst das Verfahren das Erzeugen von Simulationsdaten mittels eines digitalen Zwillings der Vorrichtung, wobei die Simulationsdaten für eine Vielzahl von Betriebsstörungen erzeugt werden; das Trainieren eines maschinellen Lernalgorithmus basierend auf den Simulationsdaten und der Vielzahl von Betriebsstörungen, um einen trainierten maschinellen Lernalgorithmus (60) zu erzeugen; und das Erkennen einer Betriebsstörung der Vorrichtung durch den trainierten maschinellen Lernalgorithmus basierend auf Betriebsdaten der Vorrichtung.

Dabei kann die erkannte Betriebsstörung der Vorrichtung ein Ereignis, ein Störfall und/oder eine vorzunehmende Wartungsmaßnahme sein. Insbesondere kann das Ereignis eine erhöhte Reibung, eine erhöhte Schwingung, eine Unwucht, ein Verschleißparameter, oder eine verringerte Schmierwirkung umfassen, der Störfall einen Motorschaden, einen Lagerschaden, einen Achsenbruch, einen Riss, eine falsch positionierte Flasche, einen Kurzschluss oder ein Stoppen der Vorrichtung umfassen, und die vorzunehmende Wartungsmaßnahme ein Reinigen, ein Schmieren, ein Ölen, ein Befestigen, ein Justieren, ein Austauchen oder ein Reparieren umfassen.

Des Weiteren kann das Erkennen der Betriebsstörung ferner ein Erkennen einer Komponente der Vorrichtung, an welcher die Betriebsstörung auftritt umfassen.

Außerdem kann das Erkennen der Betriebsstörung ferner ein Erkennen einer voraussichtlichen Zeitspanne bis zum Eintreten eines durch die Betriebsstörung herbeigeführten Störfalls umfassen.

Mittels des Verfahrens kann weiterhin ein Produktionsplan einer der Vorrichtung zugeordneten Anlage basierend auf der voraussichtlichen Zeitspanne und/oder auf einer Dauer einer vorzunehmenden Wartungsmaßnahme für die erkannte Betriebsstörung bestimmt werden.

Die Betriebsdaten können Ausgangssignale der Vorrichtung umfassen und die Simulationsdaten können Ausgangssignale des digitalen Zwillings umfassen. Jedes der

Ausgangssignale des digitalen Zwillings kann dabei einem jeweiligen Ausgangsignal der Vorrichtung entsprechen.

Des Weiteren kann jedes der Ausgangssignale der Vorrichtung von einem Sensor der Vorrichtung gemessen werden, der beim bestimmungsgemäßen Betrieb der Vorrichtung verwendet wird.

Zusätzlich können die Betriebsdaten der Vorrichtung mindestens ein zusätzliches Ausgangssignal der Vorrichtung umfassen, wobei das zusätzliche Ausgangssignal von einem zusätzlichen Sensor der Vorrichtung gemessen wird, der nicht bestimmungsgemäßen Betrieb der Vorrichtung erforderlich ist. Dementsprechend können die Simulationsdaten mindestens ein entsprechendes zusätzliches Ausganssignal des digitalen Zwillings umfassen. Zudem kann der zusätzliche Sensor der Vorrichtung mittels des digitalen Zwillings so aus einer Vielzahl möglicher zusätzlicher Sensoren ausgewählt werden, dass das Ausgangssignal des zusätzlichen Sensors das Erkennen der Betriebsstörung optimiert.

Gemäß des vorangehend beschriebenen Verfahrens kann der trainierte maschinelle Lernalgorithmus zum Erkennen der Betriebsstörung eine Wahrscheinlichkeit für jede der Betriebsstörungen basierend auf den Betriebsdaten (20A) der Vorrichtung bestimmen und eine Betriebsstörung der Betriebsstörungen als die Betriebsstörung erkennen, wenn die Wahrscheinlichkeit der Betriebsstörung einen Grenzwert erreicht.

Zudem kann der maschinelle Lernalgorithmus zusätzlich mit aufgezeichneten Betriebsdaten der Vorrichtung trainiert werden.

Gemäß einer Ausführungsform ist die Vorrichtung ein Tripod der Lebensmittelindustrie.

Eine weitere Ausführungsform der Erfindung entspricht ein System zum automatischen Erkennen einer Betriebsstörung einer Vorrichtung in der Lebensmittelindustrie oder der Getränkemittelindustrie, insbesondere zur vorausschauenden Wartung, welches einen digitalen Zwilling der Vorrichtung und einen maschinellen Lernalgorithmus umfasst. Der digitalen Zwilling ist eingerichtet zum Erzeugen von Simulationsdaten der Vorrichtung, wobei die Simulationsdaten für eine Vielzahl von Betriebsstörungen des digitalen Zwillings erzeugt werden. Der maschinellen Lernalgorithmus wird basierend auf den Simulationsdaten und den Betriebsstörungen des digitalen Zwillings trainiert und ist eingerichtet zum Erkennen einer Betriebsstörung der Vorrichtung basierend auf Betriebsdaten der Vorrichtung. Des Weiteren kann der maschinelle Lernalgorithmus von einer Steuerung der Vorrichtung, einem mit der Vorrichtung verbundenen Prozessor, oder einer Cloud ausgeführt werden.

Eine weitere Ausführungsform der Erfindung betrifft einen maschinellen Lernalgorithmus zum automatischen Erkennen einer Betriebsstörung einer Vorrichtung in der Lebensmittelindustrie oder der Getränkemittelindustrie, insbesondere zur vorausschauenden Wartung, wobei der maschinelle Lernalgorithmus basierend auf Simulationsdaten und Betriebsstörungen eines digitalen Zwillings der Vorrichtung trainiert wird, wobei der maschinelle Lernalgorithmus zum Erkennen einer Betriebsstörung der Vorrichtung basierend auf Betriebsdaten der Vorrichtung eingerichtet ist.

Ein weiteres Ausführungsbeispiel, das nicht Teil der Erfindung ist, betrifft ein Verfahren zum Bestimmen eines optimierten Produktionsplans für die Produktion eines oder mehrerer Produkte mittels einer oder mehrerer Produktionslinien in der Lebensmittelindustrie oder der Getränkemittelindustrie. In einem ersten Schritt wird die Wechseldauer des Produktionsplans optimiert. Die Wechseldauer umfasst dabei einen Produktwechsel, Flaschenwechsel, Sortenwechsel, Formatwechsel und/oder Packwechsel bei der Produktion der Produkte. Beim Optimieren der Wechseldauer wird der Produktionsplans in eine Vielzahl von zusammenhängenden Einheiten zerlegt. Jede der Einheiten entspricht dabei mindestens einem Produkt, einem Verarbeitungsschritt oder mindestens einer Vorrichtung einer Produktionslinie zur Produktion eines Produktes des Produktionsplans. Des Weiteren werden beim Optimieren der Wechseldauer die Einheiten angeordnet, so dass die Wechseldauer einen minimalen Wert hat. Danach erfolgt das Optimieren der Produktionskosten des Produktionsplans, die für die Abarbeitung der Einheiten aufzuwenden sind. Dabei sind die Produktionskosten durch Nachrüstzeiten und Produktionszeiten für die Einheiten mittels der Vorrichtungen bestimmt, wobei die Nachrüstzeiten und Produktionszeiten produkt- und vorrichtungsabhängig definiert sind. Das Optimieren der Produktionskosten umfasst das Zuordnen der Einheiten zu jeweils einer Produktionslinie und das Bestimmen einer Reihenfolge, in der die Einheiten von den Produktionslinien abzuarbeiten sind.

Ferner kann die Wechseldauer und/oder die Produktionskosten zusätzlich eine Dauer einer Wartungsmaßnahme für eine erkannte Betriebsstörung einer Vorrichtung einer Produktionslinie umfassen, wobei die Betriebsstörung durch einen maschinellen Lernalgorithmus, der basierend auf Simulationsdaten und Betriebsstörungen eines digitalen Zwillings der Vorrichtung trainiert wird oder durch den digitalen Zwilling an sich erkannt wird. Dabei ist der maschinelle Lernalgorithmus eingerichtet zum Erkennen der Betriebsstörung der Vorrichtung basierend auf Betriebsdaten der Vorrichtung.

Ein weiteres Ausführungsbeispiel, das nicht Teil der Erfindung ist, betrifft ein System, das dazu eingerichtet ist, das vorangehend beschriebene Verfahren zum Bestimmen eines optimierten Produktionsplans auszuführen.

Erfindungsgemäße Ausführungsformen werden anhand der nachfolgenden Zeichnungen beschrieben. Es zeigen:

**Figur 1**  ein beispielhaftes System zum Erzeugen von Simulationsdaten, das Trainieren eines maschinellen Lernalgorithmus und das Vorhersagen einer Betriebsstörung basierend auf aktuellen Betriebsdaten der Vorrichtung;

**Figur 2**  eine Vorrichtung, die Betriebsdaten erzeugt und einen digitalen Zwilling der Vorrichtung der Simulationsdaten für die Vorrichtung erzeugt gemäß einer beispielhaften Ausführungsform der Erfindung;

**Figur 3A**  einen digitalen Zwilling einer Vorrichtung, der für eine Vielzahl von Betriebsstörungen und für jeweils eine Vielzahl von Simulationsdurchläufen Simulationsdaten erzeugt gemäß einer beispielhaften Ausführungsform der Erfindung;

**Figur 3B**  beispielhafte Simulationsdaten des digitalen Zwillings für Normalbetrieb und verschiedene Betriebsstörungen;

**Figur 4**  das Erzeugen eines trainierten maschinellen Lernalgorithmus basierend auf den Simulationsdaten und den zugehörigen Betriebsstörungen gemäß einer beispielhaften Ausführungsform der Erfindung;

**Figur 5**     das Erkennen einer Betriebsstörung einer Vorrichtung durch einen auf Simulationsdaten des digitalen Zwillings trainierten maschinellen Lernalgorithmus basierend auf aktuellen Betriebsdaten der Vorrichtung gemäß einer beispielhaften Ausführungsform der Erfindung;

**Figur 6**     ein erfindungsgemäßes Verfahren für die vorausschauende Wartung;

**Figur 7**     ein beispielhaftes System zum Bestimmen eines optimierten Produktionsplans für die Produktion eines oder mehrerer Produkte mittels einer oder mehrerer Produktionslinien in der Lebensmittelindustrie oder der Getränkemittelindustrie; und

**Figur 8**     ein erfindungsgemäßes Verfahren für die Produktionsplanoptimierung.

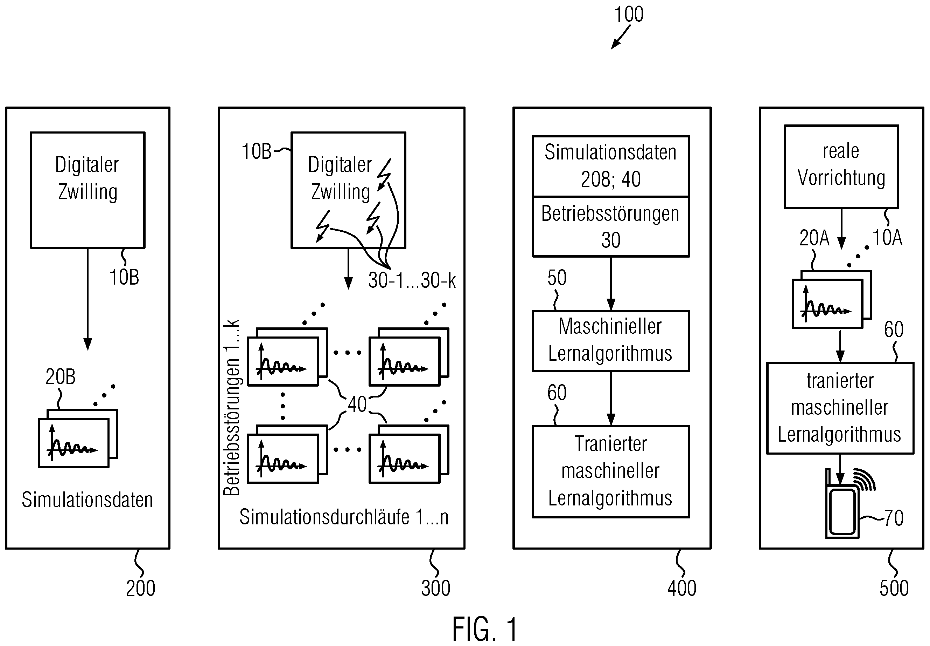

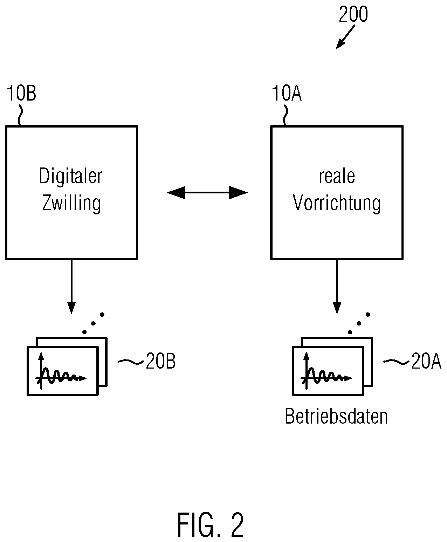

Die **Fig. 1** zeigt beispielhaft ein System 100 gemäß der vorliegenden Erfindung. Das System 100 ist hier beispielhaft unterteilt in vier Komponenten 200, 300, 400, 500. Zunächst wird anhand der **Fig. 1** ein Überblick gegeben, bevor die vier beispielhaften Komponenten 200, 300, 400, 500 im Zusammenhang mit den **Fig. 2-5** detaillierter beschrieben werden.

Erfindungsgemäß wird ein digitaler Zwilling 10B einer (realen) Vorrichtung 10A erstellt. Dies ist beispielhaft gezeigt durch Komponente 200 und wird detaillierter beschrieben im Zusammenhang mit **Fig. 2**. Dieser digitale Zwilling 10B hat die gleichen physikalischen Eigenschaften wie die reale Vorrichtung 10A. So liefert der digitale Zwilling 10B Simulationsdaten 20B, die den Betriebsdaten 20A der Vorrichtung 10A eins-zu-eins entsprechen.

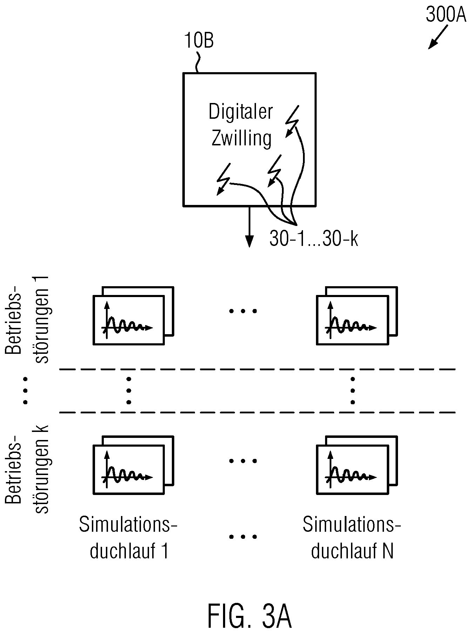

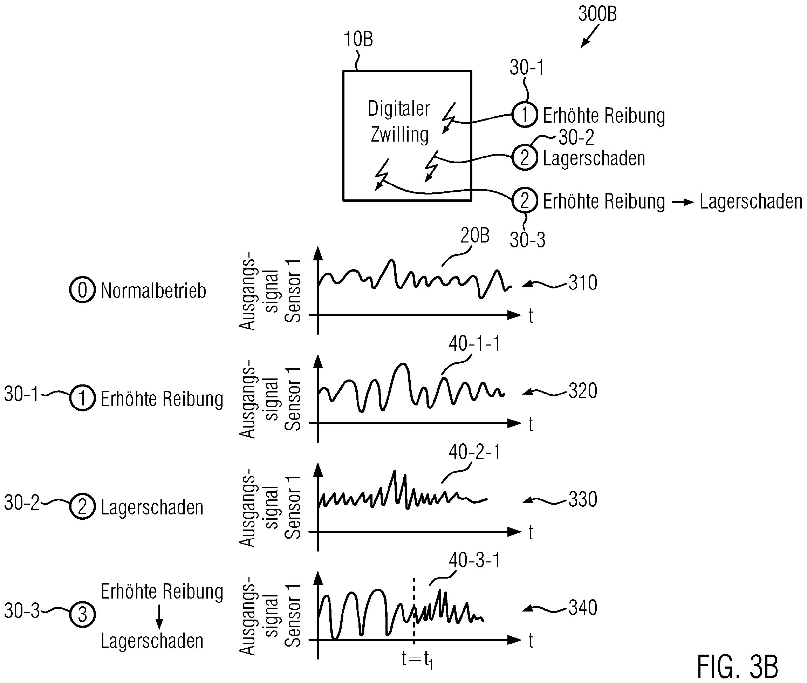

Erfindungsgemäß wird dieser digitale Zwilling 10B genutzt, um Simulationsdaten 40 für mögliche Betriebsstörungen 30 zu erzeugen. Dies ist beispielhaft gezeigt durch Komponente 300 und wird detaillierter beschrieben im Zusammenhang mit den **Fig. 3A** und **3B**. Diese Simulationsdaten 40 des digitalen Zwillings 10B entsprechen eins-zu-eins den Betriebsdaten 20A der realen Vorrichtung. Erfindungsgemäß wird anstelle des Herbeiführens einer Betriebsstörung bei der realen Vorrichtung 10A, die Betriebsstörung 30 mittels des digitalen Zwillings 10B simuliert, um so Simulationsdaten 40 zu erhalten, die den Betriebsdaten der Vorrichtung 10A beim Vorliegen einer Betriebsstörung eins-zu-eins entsprechen. Unter einer Betriebsstörung 30 sind hier zum einen Ereignisse gemeint, die zwar selbst noch keinen direkten Störfall darstellen, aber zu einem zukünftigen Störfall führen können, falls keine Wartungsmaßnahmen vorgenommen werden, wie zum Beispiel eine erhöhte Reibung (z.B. durch Verschmutzung), eine erhöhte Schwingung, eine Unwucht, ein Verschleißparameter, oder eine verringerte Schmierwirkung. Zum anderen sind damit auch Störfälle gemeint, die in Folge dieses Ereignisses eintreten können, wie zum Beispiel einen Motorschaden, einen Lagerschaden, einen Achsenbruch, einen Riss, eine falsch positionierte Flasche, einen Kurzschluss oder ein Stoppen der Vorrichtung (weil z.B. ein kritischer Wert überschritten wurde, der zu einem Stoppen der Vorrichtung führt).

So kann für den digitalen Zwilling 10B eine Vielzahl von Betriebsstörungen 30 definiert werden, welche beispielsweise auf Erfahrungswerten, bereits aufgetretenen Betriebsstörungen oder zufällig generierten Betriebsstörungen basieren können. Diese Betriebsstörungen können auch für verschiedene Komponenten des digitalen Zwillings (wie z.B. einem Lager, einer Kette, einem Zahnrad, einem Motor, etc.) definiert und simuliert werden. Im Anschluss erfolgt die Simulation dieser Betriebsstörungen 30 mit Hilfe des digitalen Zwillings 10B, wobei eine Vielzahl von Simulationsdaten 40 für jede der Betriebsstörungen 30 erzeugt werden kann. Die so erzeugten Simulationsdaten können dann zum trainieren eines maschinellen Lernalgorithmus 50 (wie zum Beispiel eines Klassifikators) genutzt werden.

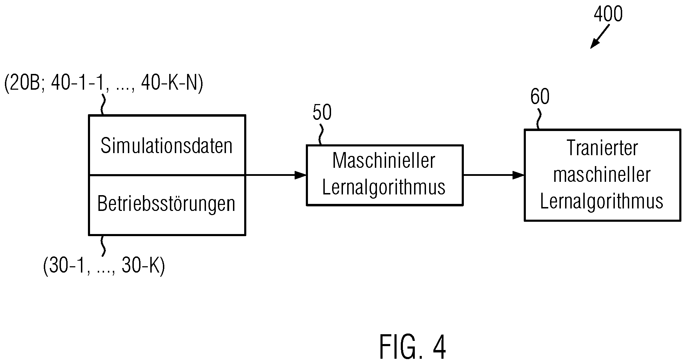

Basierend auf den Betriebsstörungen 30 und den Simulationsdaten 40 des digitalen Zwillings 10B kann dann der maschineller Lernalgorithmus 50 trainiert werden, um einen trainierten maschinellen Lernalgorithmus 60 zu erzeugen. Das Training des maschinellen Lernalgorithmus 50 wird so durchgeführt, dass der trainierte maschinelle Lernalgorithmus 60 in der Lage ist, anhand den Simulationsdaten 40 einer bestimmten Betriebsstörung 30, diese Betriebsstörung zu erkennen. Dies ist beispielhaft gezeigt durch Komponente 400 und wird detaillierter beschrieben im Zusammenhang mit **Fig. 4**. Die Erfindung ermöglicht es Simulationsdaten 40 zum Trainieren des maschinellen Lernalgorithmus 50 zu erzeugen, die, da sie durch den digitalen Zwilling 10B der realen Vorrichtung 10A erzeugt wurden, eins-zu-eins den Betriebsdaten der realen Vorrichtung 10A entsprechen. Dabei ist es gemäß der vorliegenden Erfindung nicht mehr nötig Betriebsstörungen der realen Vorrichtung 10A herbeizuführen, um entsprechende Betriebsdaten für die Betriebsstörungen zu erzeugen, sondern es werden Simulationsdaten 40 für am digitalen Zwilling 10B simulierte Betriebsstörungen 30 erzeugt. So ist es möglich eine Vielzahl von Trainingsdaten (nämlich die Simulationsdaten 40) für eine Vielzahl von entsprechenden Betriebsstörungen 40 (also auch für solche Betriebsstörungen, die nur selten im Betrieb der realen Vorrichtung auftreten) zu erzeugen.

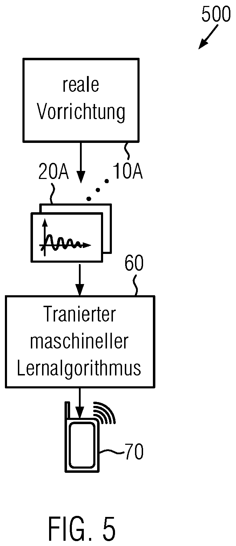

Der auf den Simulationsdaten 40 des digitalen Zwillings 10B trainierte maschinelle Lernalgorithmus 60 wird dann zum Vorhersagen einer Betriebsstörung der (realen) Vorrichtung 10A basierend auf aktuellen Betriebsdaten 20A der realen Vorrichtung 10A eingesetzt. Dies ist beispielhaft gezeigt durch Komponente 500 und wird detaillierter beschrieben im Zusammenhang mit **Fig. 5**. Dazu kann der trainierte maschinelle Lernalgorithmus 60 beispielsweise in einen allgemein ausführbaren Code übersetzt werden und auf die Steuerung der (realen) Vorrichtung 10A oder einen zusätzlichen Industrie-PC (IPC) portiert werden. Es ist auch möglich den trainierten maschinellen Lernalgorithmus 60 in einer Cloud anzuwenden. Während des Betriebs der (realen) Vorrichtung 10A werden dann kontinuierlich die Ausgangssignale der (realen) Vorrichtung 10A dem trainierten maschinellen Lernalgorithmus 60 bereitgestellt. Der trainierte Lernalgorithmus 60 bestimmt dann automatisch (auf Basis seines trainierten Wissens und den Ausgangssignalen der Vorrichtung 10A) den aktuellen Zustand der Vorrichtung 10A und erkennt, ob eine Betriebsstörung vorliegt und/oder bevorsteht. Des Weiteren kann der maschinelle Lernalgorithmus 60 erkennen um welche Betriebsstörung es sich handelt (was dazu genutzt werden kann geeignete Wartungsmaßnahmen einzuleiten, um die Betriebsstörung zu beseitigen und das Eintreten eines Störfalls/Schadens zu Vermeiden), an welcher Komponente der Vorrichtung die Betriebsstörung auftritt, und wie lange es noch dauert bis ein Störfall auftritt, falls keine Wartungsmaßnahmen durchgeführt werden. So kann zum Beispiel zusätzlich zum Erkennen, dass erhöhte Reibung in einem gewissen Lager vorliegt, festgestellt werden, wie lange die Vorrichtung noch betrieben werden kann, bevor das Lager ausfällt, die Bestellung eines neuen Lagers ausgelöst werden und/oder ein Servicetechniker verständigt werden.

Ein weiterer Vorteil der Erfindung ist es, dass keine (oder nur wenige) zusätzliche Sensoren an der Vorrichtung 10A angebracht werden müssen, welche (wie oben beschrieben) im Stand der Technik benutzt werden, um zusätzliche Betriebsdaten der Vorrichtung zu erhalten, um eine präziserer Erkennen einer Betriebsstörung zu ermöglichen. Unter einem zusätzlichen Sensor wird hier ein Sensor verstanden, der nicht ohnehin schon aus anderen Gründen (die nicht direkt mit der vorausschauenden Wartung zusammenhängen), wie, z.B. aus dem Grund, dass er für den bestimmungsgemäßen Betrieb der Vorrichtung nötig ist, in der Vorrichtung 10A vorhanden ist und dazu verwendet wird die vorausschauende Wartung zu verbessern. Ein Sensor, der ohnehin schon in der Vorrichtung 10A vorhanden ist (und für den bestimmungsgemäßen Betrieb der Vorrichtung verwendet wird) wird im Folgenden betriebsbedingter Sensor genannt.

Gemäß der hier vorliegenden Erfindung ist es möglich, auf zusätzliche Sensoren zu verzichten (oder deren Anzahl zu verringern), da der digitale Zwilling 10B eine Vielzahl an Simulationsdaten 40 für alle möglichen Betriebsstörungen 30 erzeugen kann, und dadurch beim Training des maschinellen Lernalgorithmus 50 auf die zusätzlichen Betriebsdaten zusätzlicher Sensoren verzichtet werden kann. Insbesondere ist dies möglich, da der digitale Zwilling 10B die gleichen Ausganssignale (als Simulationsdaten 20B) erzeugt, die auch bei der realen Vorrichtung 10A (als Betriebsdaten 20A) gemessen werden. Das heißt, der digitale Zwilling 10B hat die gleichen betriebsbedingten Sensoren wie die (reale) Vorrichtung 10A und liefert somit simulierte Ausgangssignale, die den realen Betriebsdaten 20A der realen Vorrichtung 10A entsprechen, insbesondere den realen Betriebsdaten, die die betriebsbedingten Sensoren liefern, welche ohnehin im Betrieb der Vorrichtung 10A anfallen. In anderen Worten, der digitale Zwilling 10B erzeugt (für eine Vielzahl von Betriebsstörungen 30) eine Vielzahl an Simulationsdaten 40, die den Betriebsdaten 20A der betriebsbedingten Sensoren der realen Vorrichtung 10A entsprechen. Mit diesen Simulationsdaten 40 (also den simulierten Ausgangssignalen der betriebsbedingten Sensoren des digitalen Zwillings, die den realen Ausgangssignalen der betriebsbedingten Sensoren der realen Vorrichtung entsprechen) ist es möglich den maschinellen Lernalgorithmus 50 präzise zu trainieren. Es ist deshalb nicht notwendig an der realen Vorrichtung 10A eine Vielzahl zusätzlicher Sensoren anzubringen oder Versuche durchzuführen oder reale Betriebsstörungen zu monitoren.

Des Weiteren ist es mit Hilfe des digitalen Zwillings 10B möglich, im Fall, dass ein zusätzlicher Sensor benutzt werden soll, diesen zusätzlichen Sensor möglichst optimal auszuwählen. So kann beispielsweise die Art des zusätzlichen Sensors (z.B., ein Schwingungs-, Spannungs-, oder Drehmomentsensor) und die Stelle des Sensors an der Vorrichtung 10A mit Hilfe des digitalen Zwillings 10B so bestimmt werden, dass das Erkennen einer Betriebsstörung durch einen trainierten maschinellen Lernalgorithmus 60 optimal verbessert wird. Dazu können einer oder mehrere zusätzliche Sensoren zum digitalen Zwilling 10B hinzugefügt werden und es können Simulationsdaten 40 für die betriebsbedingten Sensoren und den einen oder die mehreren zusätzlichen Sensor erzeugt werden. Anschließend wird ein maschineller Lernalgorithmus 50 basierend nur auf den Simulationsdaten der betriebsbedingten Sensoren, und der gleiche maschinelle Lernalgorithmus 50 basierend auf den Simulationsdaten der betriebsbedingten Sensoren und dem einen oder den mehreren zusätzlichen Sensoren trainiert. Danach kann verglichen werden, ob der trainierte maschinelle Lernalgorithmus 60-2, der zusätzlich basierend auf den Simulationsdaten des einen oder der mehreren zusätzlichen Sensoren trainiert wurde, eine Betriebsstörung besser (z.B., früher oder mit höherer Wahrscheinlichkeit) vorhersagen kann, als der trainierte maschinelle Lernalgorithmus 60-1 der nur auf den Simulationsdaten der betriebsbedingten Sensoren trainiert wurde. Dieser Vorgang kann mit einem oder mehreren anderen zusätzlichen Sensoren am digitalen Zwilling 10B wiederholt werden und es kann mit den jeweiligen Simulationsdaten eine Vielzahl von trainierten maschinellen Lernalgorithmen 60-1 ... 60-L erzeugt werden. Schließlich kann so der Einfluss verschiedener zusätzlicher Sensoren auf die Präzision der trainierten maschinellen Lernalgorithmen 60-1 bis 60-L für das Erkennen einer Betriebsstörung verglichen werden. Der (oder die) zusätzliche Sensor basierend auf dessen Simulationsdaten ein trainierter maschineller Lernalgorithmus mit der besten Präzision erzeugt wurde kann dann ausgewählt werden. Dieser, mittels des digitalen Zwillings 10B bestimmte Sensor, kann dann an der realen Vorrichtung 10A angebracht werden und für die vorausschauende Wartung der realen Vorrichtung verwendet werden.

**Fig. 1** zeigt eine Ausführungsform der vorliegenden Erfindung für eine Vorrichtung 10A in der Lebensmittelindustrie, insbesondere der Getränkemittelindustrie. In einem Beispiel ist die Vorrichtung 10A ein Tripod der Lebensmittelindustrie, wie er aus der DE 10 2013 208 082 A1 bekannt ist. Im Betrieb erzeugt die Vorrichtung 10A Betriebsdaten 20A, wie den zeitlichen Verlauf der Ausgangssignale der Vorrichtung 10A. Typischerweise umfassen die Ausgangssignale eines oder mehrere von einem Drehmoment, einer Geschwindigkeit, einer Beschleunigung, einer Stromstärke, einer Spannung, einer Temperatur und einer Schwingung, die von entsprechenden Sensoren der Vorrichtung 10A gemessen werden. Es ist das Ziel der Erfindung basierend auf den Betriebsdaten 20A der Vorrichtung 10A automatisch zu erkennen, ob (und/oder wann) die Vorrichtung gewartet werden muss, um eine Betriebsstörung abzuwenden. Typische Wartungsarbeiten sind zum Beispiel die Reinigung von einzelnen Komponenten der Vorrichtung, der Austausch von Verschleißteilen, das Schmieren von Lagern, etc. Das Erkennen einer Betriebsstörung und die daraus resultierende, rechtzeitige Vornahme von Wartungsmaßnahmen ist auch bekannt als vorausschauende Wartung.

Gemäß einer Ausführungsform der Erfindung ist es insbesondere möglich eine Betriebsstörung nur auf den Betriebsdaten von betriebsbedingten Sensoren der Vorrichtung (also Sensoren, die ohnehin für den Betrieb der Vorrichtung verwendet werden und zur Verfügung stehen) oder auf den Betriebsdaten der betriebsbedingten Sensoren und nur wenigen ausgewählten zusätzlichen Sensoren (die speziell für die vorherschauende Wartung verwendet werden) vorherzusagen.

Erfindungsgemäß wird dazu ein digitaler Zwilling 10B der Vorrichtung 10A erzeugt. Dabei ist der digitale Zwilling 10B ein digitaler Repräsentant der (realen) Vorrichtung 10A, der die reale Vorrichtung 10A in einer Computer-ausführbaren Komponente nachbildet. Das Erzeugen eines digitalen Zwillings ist im Stand der Technik bekannt. Der digitale Zwilling 10B der Vorrichtung 10A kann dann dazu benutzt werden, alle Prozesse zu simulieren, die von der (realen) Vorrichtung 10A durchgeführt werden. Zum Beispiel, kann der digitale Zwilling 10B dazu benutzt werden den zeitlichen Verlauf der translatorischen und rotatorischen Bewegung der Vorrichtung 10A sowie die dazu verwendeten Steuersignale und die dabei erzeugten Ausgangssignale der Vorrichtung 10A zu simulieren. Der digitale Zwilling 10B kann so Simulationsdaten 20B erzeugen, die den Betriebsdaten 20A der realen Vorrichtung 10A entsprechen. Das heißt, während ein Prozess am digitalen Zwilling 10B simuliert wird, kann der digitale Zwilling 10B Simulationsdaten 20B der zeitlichen Ausgangssignale (wie zum Beispiel eines oder mehrere von einem Drehmoment, einer Geschwindigkeit, einer Beschleunigung, einer Stromstärke, einer Spannung, einer Temperatur und einer Schwingung), die von (simulierten) Sensoren des digitalen Zwillings 10B gemessen werden erzeugen. Diese Simulationsdaten 20B entsprechen den Betriebsdaten 20A, die die Vorrichtung 10A ausgeben würde, wenn der gleiche Prozess (der mittels des digitalen Zwillings 10B simuliert wird und zu den Simulationsdaten 20B des digitalen Zwillings 10B führt) an der realen Vorrichtung 10A durchgeführt werden würde. Insbesondere entsprechen diese Simulationsdaten 20B den zeitlichen Ausgangssignalen (wie zum Beispiel eines oder mehrere von einem Drehmoment, einer Geschwindigkeit, einer Beschleunigung, einer Stromstärke, einer Spannung, einer Temperatur und einer Schwingung), die von den (realen) Sensoren der Vorrichtung 10A beim Durchführen des gleichen Prozesses gemessen werden würden.

Wie oben beschrieben, ist es ein Problem im Stand der Technik, dass für das Erkennen einer Betriebsstörung der Vorrichtung 10A typischerweise zu wenige Betriebsdaten 20A für die möglichen Betriebsstörungen zur Verfügung stehen oder Betriebsdaten nur unter hohem Aufwand erzeugt werden können. Erfindungsgemäß werden Betriebsstörungen der Vorrichtung 10A durch den digitalen Zwilling 10B simuliert, was das Erzeugen einer Vielzahl von Simulationsdaten 40 für eine Vielzahl von Betriebsstörungen 30 ermöglicht. Dies zeigt die **Fig. 3A,** in der beispielhaft K Betriebsstörungen 30-1, 30-2 ... 30-K des digitalen Zwillings 10B illustriert sind. Jede dieser K Betriebsstörungen kann eine Schadensklasse sein oder einer Schadensklasse entsprechen, die am digitalen Zwilling 10B vordefiniert werden kann. Der digitale Zwilling 10B kann für jede der K Betriebsstörungen eine Vielzahl (N) von Simulationsdurchläufen durchführen. Dabei kann der digitale Zwilling 10B für jeden der N Simulationsdurchläufe Simulationsdaten 40-1-1 ... 40-K-N erzeugen, welche jeweils den zeitlichen Verlauf der M Ausganssignale des digitalen Zwillings 10B wiedergeben. In anderen Worten es werden für K Betriebsstörungen jeweils N Simulationsdurchläufe durchgeführt, welche jeweils M Ausgangssignale beinhalten. So können K x N x M zeitliche Verläufe von einzelnen Ausgangssignalen erzeugt werden (dabei sind K, N und M ganze Zahlen). Um einen Vergleich zum Normalbetrieb (also einem Betrieb ohne Betriebsstörung) zu haben, können auch Simulationsdaten 20B des digitalen Zwillings 10B ohne Betriebsstörung erzeugt werden. Unter einer Betriebsstörung sind hier zum einen Ereignisse gemeint, die zwar selbst noch keinen Störfall darstellen, aber zu einem zukünftigen Störfall führen können (falls keine Wartungsmaßnahmen vorgenommen werden), wie zum Beispiel Verschmutzung, Verschleiß, Unwuchten und/oder erhöhte Reibung, und zum anderen auch die Störfalle selbst, die in Folge dieses Ereignisses eintreten können, wie zum Beispiel Motorschaden, Lagerschaden, Riss in einer Komponente, falsch platzierte Flaschen oder auch das Stoppen der Vorrichtung (z.B. in Folge eines Überschreitens eines kritischen Wertes, der zu einem (Not-)stopp der Vorrichtung führt). Die vorangehend beschriebenen Betriebsstörungen 30-1, 30-2 ... 30-K können eine Schadensklasse sein und/oder als Schadensklassen am digitalen Zwilling 10B definiert werden und können mittels des digitalen Zwillings 10B simuliert werden. So können beispielsweise verschiedene Klassen von Reibung in einer (oder mehrere) Komponente(n) mittels verschiedenen Reibungskoeffizienten als jeweils unterschiedliche Betriebsstörungen simuliert werden.

Mögliche Ereignisse Ereignisse, die zu einem Störfall für den oben beispielhaft genannten Tripod der Lebensmittelindustrie führen, sind z.B. ein erhöhte Reibung in einem Gelenk, eine verringerte Schmierwirkung in einem prismatischen Kardangelenk, oder eine erhöhte Reibung zwischen Gebinde und Mattenkette durch Verschmutzung. Mögliche Störfälle die bei dem oben beispielhaft genannten Tripod der Lebensmittelindustrie auftreten können, sind z.B. ein Lagerschaden in einem Gelenk, das Lösen der Verbindung zwischen Gebinde und Mattenkette und ein Motorschaden.

Wie vorangehend beschrieben, können für jeden der K Betriebsstörungen bzw. Schadensklassen (und z.B. auch für den Fall, dass keine Betriebsstörung vorliegt) N Simulationsdurchläufe des digitalen Zwillings 10B durchgeführt werden, um für jede Betriebsstörung N verschieden Simulationsdaten zu erzeugen. Dazu können jeweils N Simulationsdurchläufe des digitalen Zwillings durchgeführt werden, die zwar jeweils der gleichen Betriebsstörung unterliegen, die sich aber dennoch voneinander unterscheiden. N ist hierbei eine beliebige natürliche Zahl größer 1, vorzugsweiße größer 100. So können z.B. zufällige Startbedingungen für die Simulation der Betriebsstörung gewählt werden oder auch die Parameter, die die Betriebsstörung beschreiben (wie beispielsweise der Reibungskoeffizient) geringfügig variiert werden. Des Weiteren ist es möglich die Simulationsdurchläufe stochastischen Schwankungen auszusetzen, was dazu führt, dass sich die einzelnen Simulationsdurchläufe trotz gleicher (oder sehr ähnlicher) Betriebsstörung voneinander unterscheiden. Eine Simulation kann dann entweder nach Ablauf einer vorbestimmt Zeit gestoppt werden oder bei Eintritt eines bestimmten Events (insbesondere des mit einem Ereignis verbundenen Störfalls) gestoppt werden. Auf diese Weise können für jede der K Betriebsstörungen 30-1, 30-2 ... 30-K Simulationsdaten 40-1-1 ... 40-K-N erzeugt werden. Vorangehend wurde beschrieben, dass für jede Betriebsstörung N Simulationsdaten erzeugt werden; damit ist jedoch nicht gemeint, dass für jede Betriebsstörung 30-1, 30-2 ... 30-K genau gleich viele Simulationsdaten vorliegen müssen. Es ist natürlich auch möglich, dass für einen oder auch mehrere der Betriebsstörungen 30-1, 30-2 ... 30-K weniger oder mehr als N Simulationsdaten erzeugt werden.

Somit können beliebig viele Simulationsdaten 40-1-1 ... 40-K-N für alle möglichen Betriebsstörungen durch den digitalen Zwilling 10B der Vorrichtung 10A erzeugt werden. Dies löst das oben beschriebene Problem im Stand der Technik, dass für manche Betriebsstörungen nur wenige aufgezeichnete Betriebsdaten 20A der Vorrichtung 10A zur Verfügung stehen oder diese nur unter großem Aufwand erzeugt werden können.

Ein Beispiel für das Erzeugen von Simulationsdaten für ein einzelnes der M Ausgangssignale (z.B. für Sensor 1 der M Sensoren) für einen einzelnen Simulationsdurchlauf des digitalen Zwillings 10B für keine Betriebsstörung 310 und für drei beispielhafte Betriebsstörungen 320, 330, 340 wird im Folgenden an Hand der **Fig. 3B** gezeigt. Wie vorgehend erwähnt werden üblicherweise für K Betriebsstörungen jeweils N Simulationsdurchläufe mit jeweils M Ausgangssignale durchgeführt. Das an Hand der **Fig. 3B** beschriebene Beispiel für einen Simulationsdurchlauf und ein Ausgangssignal kann auf diesen allgemeinen Fall ohne weiteres erweitert werden.

Das Schaubild 310 zeigt das simulierte Ausgangssignal eines Sensors (in diesem Beispiel Sensor 1) für einen Simulationsdurchlauf des digitalen Zwillings 10B für den Fall dass keine Betriebsstörung vorliegt. Des Weiteren zeigen die Schaubilder 320, 330 und 340 das simulierte Ausgangssignal eines Sensors (in diesem Beispiel Sensor 1) für einen Simulationsdurchlauf des digitalen Zwillings 10B für den Fall dass verschiedene Betriebsstörungen 30-1, 30-2 und 30-3 vorliegt. Um eine Betriebsstörung zu simulieren können am digitalen Zwilling 10B verschiedene Komponenten des digitalen Zwillings 10B ausgewählt werden (wie zum Beispiel ein bestimmtes Lager, eine Achse, ein Motor, etc.) und für die ausgewählten Komponenten jeweils verschiedene Arten von Betriebsstörungen (wie zum Beispiel, erhöhte Reibung, Unwucht, etc.) simuliert werden. In den Schaubildern 320, 330 und 340 wird beispielhaft ein bestimmtes Lager als Komponente des digitalen Zwillings ausgewählt. Des Weiteren werden beispielhaft drei verschiedene Betriebsstörungen 30-1, 30-2 und 30-3 für diese Komponente simuliert. Das Schaubild 320 zeigt beispielhaft eine Betriebsstörung 30-1, die ein Ereignis (im oben beschriebenen Sinne) darstellt, hier eine erhöhte Reibung im ausgewählten Lager. Wie oben beschrieben, stellt ein Ereignis eine Betriebsstörung dar, die durch eine Wartungsmaßnahme behoben werden kann, die aber, falls sie nicht behoben wird zu einem Störfall, wie einem Schaden der Vorrichtung, führen kann. Die Betriebsstörung erhöhte Reibung in dem ausgewählten Lager wird in dem hier gezeigten Beispiel für eine bestimmte Zeit mittels des digitalen Zwillings 10B simuliert und erzeugt die Simulationsdaten 40-1-1 (hier beispielhaft für Sensor 1). Das Schaubild 330 zeigt beispielhaft eine Betriebsstörung 30-2, die einen Störfall (im oben beschriebenen Sinne) darstellt, hier einen Schaden des ausgewählten Lagers. Die Betriebsstörung Schaden des ausgewählten Lagers wird in dem hier gezeigten Beispiel für eine bestimmte Zeit mittels des digitalen Zwillings 10B simuliert und erzeugt die Simulationsdaten 40-2-1 (hier beispielhaft für Sensor 1). Des Weiteren zeigt das Schaubild 340 beispielhaft eine Betriebsstörung 30-3, die beides, ein Ereignis ("erhöhte Reibung") und einen Störfall ("Lagerschaden") umfasst, wobei der Störfall durch das Ereignis verursacht wurde. Wie in Schaubild 340 dargestellt, wird in diesem Fall anfangs ein Ereignis simuliert und während der Simulation des Ereignisses tritt ein Störfall auf. Typischerweise kann der Störfall nach einer gewissen Zeit ($t = t_1$) eintreten. Auf diese Weise kann eine Vielzahl von Betriebsstörungen definiert werden (z.B., indem eine Art von Betriebsstörung und ein Ort der Betriebsstörung gewählt werden), die mittels des digitalen Zwillings 10B jeweils Simulationsdaten für M Sensoren und N Simulationsdurchläufe liefern können.

Wie vorangehend beschrieben können bei jedem Simulationsdurchlauf mittels des digitalen Zwillings 10B die zeitlichen Verläufe der translatorischen und rotatorischen Bewegungen der Vorrichtung 10A, sowie deren Eingangs-Steuer-, und Ausgangssignale simuliert werden. Die zeitlichen Verläufe der M Ausganssignale des digitalen Zwillings 10B können dann als Simulationsdaten 20B, 40-1-1, ..., 40-K-N verwendet werden. Der digitale Zwilling 10B hat die gleichen physikalischen Eigenschaften wie die (reale) Vorrichtung 10A und liefert die gleichen M Ausgangssignale (also die Betriebsdaten 20A) wie die Vorrichtung 10A. Das heißt, dass die Simulationsdaten 40-1-1 ... 40-K-N, die für die K Betriebsstörungen mittels des digitalen Zwillings 10B erzeugt werden, den Betriebsdaten 20A entsprechen, die die Vorrichtung 10A ausgeben würde, wenn sie der jeweiligen Betriebsstörung unterliegen würde. So können für jede der K Betriebsstörungen 30-1 ... 30-K Simulationsdaten des digitalen Zwillings 10B erzeugt werden, die den Betriebsdaten der realen Vorrichtung 10A entsprechen.

Diese Simulationsdaten des digitalen Zwillings 10B (die den Betriebsdaten der Vorrichtung 10A entsprechen) können dann dazu benutzt werden einen maschinellen Lernalgorithmus 50, wie beispielsweise einen Klassifikator zu trainieren. Dabei lernt der maschinelle Lernalgorithmus 50 charakteristische Merkmale, die in den Simulationsdaten 20B, 40-1-1 ... 40-K-N der simulierten Betriebsstörung 30-1 ... 30-K des digitalen Zwillings 10B auftreten. Anschließend kann ein so trainierter maschineller Lernalgorithmus 60 diese charakteristischen Merkmalen auch in den Betriebsdaten 20A der realen Vorrichtung 10A wiederfinden und so eine Betriebsstörung der realen Vorrichtung 10A erkennen. Dies ermöglicht es nicht nur zu erkennen, ob eine Betriebsstörung vorliegt, sonder auch welche Betriebsstörung vorliegt, an welcher Komponente diese vorliegt und/oder wie viel Zeit für die Durchführung einer Wartungsmaßnahme verbleibt, bevor ein Schaden oder Störfall eintritt.

Die vorangehend beschriebenen, für den digitalen Zwilling 10B definierten Betriebsstörungen 30-1, 30-2 ... 30-K können dann wie nachstehend detaillierter beschrieben mittels eines trainierten maschinellen Lernalgorithmus auch an der realen Vorrichtung 10A erkannt werden. Insbesondere ist es möglich, dass der trainierte maschinelle Lernalgorithmus sowohl die Art wie auch den Ort der Betriebsstörung erkennt, da eine für den digitalen Zwilling 10B definierte Betriebsstörung sowohl eine Art der Betriebsstörung (z.B., ein Ereignis wie erhöhte Reibung) als auch einen Ort der Betriebsstörung (z.B., an welcher Komponente des digitalen Zwillings 10B die Betriebsstörung auftritt) umfassen kann. Zum Beispiel, ist die Betriebsstörung des digitalen Zwillings "erhöhte Reibung in Lager X", so kann der trainierte maschinelle Lernalgorithmus basierend auf den Betriebsdaten der Vorrichtung diese beiden Informationen erkennen, also die Art der Betriebsstörung ("erhöhte Reibung") und den Ort der Betriebsstörung ("Lager X").

Des Weiteren ist es möglich eine voraussichtlich Zeitspanne bis zum Eintritt eines Störfalls, der mit einem Ereignis zusammenhängt (wie zum Beispiel der durch erhöhte Reibung versursachte Lagerschaden in 340), zu bestimmen. Gemäß einer Ausführungsform kann diese Zeitspanne direkt basierend auf den Simulationsdaten ermittelt werden. Eine Möglichkeit ist es zum Beispiel, den Mittelwert der Zeitspanne $t_1$ (in Schaubild 340) bis zum Eintritt des mit dem Ereignis verbundenen Störfalls über alle N Simulationsdurchläufe für dieses Ereignis zu bilden. Erkennt der trainierte maschinelle Lernalgorithmus 60 dann basierend auf den Betriebsdaten der Vorrichtung 10A dieses Ereignis, kann der so gebildete Mittelwert als zusätzliche Information (zusätzlich zu der Art und dem Ort des Ereignisses) ausgegeben werden. In dem in Schaubild 340 beschriebenen Beispiel könnte eine entsprechende Benachrichtigung lauten: "Erhöhte Reibung in Lager X, voraussichtliche Zeitspanne bis Eintritt Lagerschaden: $t_1$". In einer alternativen Ausführungsform könnte der maschinelle Lernalgorithmus auch dazu trainiert werden, die voraussichtliche Zeitspanne bis zum Eintritt eines Störfalls vorherzusagen. Der Begriff Zeitspanne kann hier eine konkrete Zeitdauer (wie z.B. noch 24 Stunden) oder eine noch zu produzierende Stückzahl (wie z.B. noch 1000 Produktionseinheiten) bis zum Eintritt des mit dem Ereignis verbundenen Störfalls sein.

Die **Fig. 4** zeigt beispielshaft das Trainieren eines maschinellen Lernalgorithmus 50 basierend auf den Simulationsdaten 20B, 40-1-1, ..., 40-K-N und den Betriebsstörungen 30-1 ... 30-K des digitalen Zwillings 10B. Der maschinelle Lernalgorithmus 50 kann jeder geeignete maschinelle Lernalgorithmus sein, wie er im Stand der Technik bekannt ist, wie zum Beispiel ein Klassifikator oder ein Regressionsverfahren. Bekannte Beispiele hierfür sind neuronale Netze, Support Vector Machines, Boosting, naive Bayes, etc.

Beim Trainieren können die Betriebsstörungen 30-1 ... 30-K (und das Vorhandensein keiner Betriebsstörung) bzw. die Schadensklassen als Ground Truth und die Simulationsdaten 20B, 40-1-1, ..., 40-K-N als entsprechende Trainingsdaten benutzt werden. Durch das Training werden die Parameter des maschinellen Lernalgorithmus 50 bestimmt, mit denen der trainierte maschinelle Lernalgorithmus 60 basierend auf den Trainingsdaten (also den Simulationsdaten 20B, 40-1-1, ..., 40-K-N) den jeweiligen Ground Truth (z.B., ob eine und wenn ja welche der Betriebsstörungen 30-1 ... 30-K, die den jeweiligen Simulationsdaten 20B, 40-1-1, ..., 40-K-N entsprechen vorliegt) optimal erkennen kann. Der maschinelle Lernalgorithmus 50 mit den so bestimmten optimalen Parametern ist der trainierte maschinelle Lernalgorithmus 60. Das Trainieren von maschinellen Lernalgorithmen (z.B., durch das Aufteilen der Trainingsdaten in einen Testsatz und einen Trainingssatz, das Optimieren eines Fehlerterms und das Verwenden von Kreuzvalidierung) ist im Stand der Technik bekannt. Der trainierte maschinelle Lernalgorithmus 60 ist dann in der Lage, gegeben einem Datensatz der Simulationsdaten (z.B. 40-2-1), die Betriebsstörung, die bei der Simulation dieses Datensatzes vorlag (für 40-2-1 ist das die Betriebsstörung 30-2) präzise vorherzusagen.

Zusätzliches oder alternatives Lernziel (Ground Truth) des maschinellen Lernalgorithmus kann auch eine voraussichtliche Zeitspanne bis zum Eintritt eines Störfalls sein. Des Weiteren können mehrere Betriebsstörungen bzw. Schadensklassen (wie zum Beispiel mehrere Klassen von erhöhter Reibung) zusammengefasst werden, so dass der trainierte maschinelle Lernalgorithmus nur die zusammengefasste Betriebsstörung erkennt (zum Beispiel nur erhöhte Reibung und nicht wie hoch die erhöhte Reibung im Einzelfall ist). Eine weitere Möglichkeit ist es anstatt, oder zusätzlich zu den oben diskutierten Lernzielen (Ground Truth) die Wartungsmaßnahme für die erkannte Betriebsstörung auszugeben.

In einer Ausführungsform der Erfindung können zusätzlich zu den Simulationsdaten 20B, 40-1-1, ..., 40-K-N des digitalen Zwillings 10B auch historische Betriebsdaten der Vorrichtung 10A für das Training des maschinellen Lernalgorithmus verwendet werden. Falls es historische Betriebsdaten für Betriebsstörungen gibt, die gleich einer der simulierten Betriebsstörungen 30-1 ... 30-K ist, können diese historischen Betriebsdaten den Simulationsdaten dieser Betriebsstörung hinzugefügt werden und der maschinelle Lernalgorithmus 50 kann basierend auf den Simulationsdaten 20B, 40-1-1, ..., 40-K-N und den historischen Betriebsdaten für diese Betriebsstörung trainiert werden. Zudem ist es möglich zusätzliche Betriebsstörungen bzw. Schadensklassen zu definieren, die nicht mit dem digitalen Zwilling 10B simuliert werden können. Ein Beispiel hierfür ist das Eingreifen eines Betreibers der Vorrichtung 10A, bei dem der Betreiber zum Beispiel die Steuerung der Vorrichtung 10A übernimmt (z.B., indem er die automatische Steuerung der Vorrichtung übersteuert). Dies ist zum Beispiel der Fall, wenn der Betreiber basierend auf seinen Erfahrungswerten feststellt, dass eine Unregelmäßigkeit im Betrieb der Vorrichtung 10A vorliegt. Ein Eingreifen eines Betreibers der Vorrichtung kann so als neue Betriebsstörung (z.B., 30-K+1) definiert werden und die Betriebsdaten, die vor Auftreten des Eingriffs aufgezeichnet wurden können als historische Betriebsdaten zum Trainieren des maschinellen Lernalgorithmus 50 verwendet werden. Des Weiteren können, für den Fall, dass keine Betriebsstörung vorliegt, anstelle von (oder zusätzlich zu) Simulationsdaten 20B (die für den Normalbetrieb ohne Betriebsstörung mittels des digitalen Zwillings 10B erzeugt wurden) auch historische Betriebsdaten der Vorrichtung 10A für das Trainieren des maschinellen Lernalgorithmus 50 verwendet werden, die aufgezeichnet wurden, als keine Betriebsstörung vorlag.

Der vorgehend beschriebene, mit Hilfe des digitalen Zwillings 10B trainierte maschinelle Lernalgorithmus 60 wird dann erfindungsgemäß zum Erkennen einer Betriebsstörung der (realen) Vorrichtung 10A verwendet, wie in **Fig. 5** beispielhaft gezeigt. Dazu werden die (aktuellen) Betriebsdaten 20A der Vorrichtung 10A dem trainierten maschinellen Lernalgorithmus 60 zur Verfügung gestellt, der basierend auf den Betriebsdaten 20A eine Betriebsstörung der Vorrichtung 10A erkennen kann. Insbesondere ist der trainierte maschinelle Lernalgorithmus dazu eingerichtet zu erkennen welche Betriebsstörung vorliegt (z.B., ein Ereignis wie erhöhte Reibung), wo diese Betriebsstörung vorliegt (z.B., erhöhte Reibung in Kardangelenk) und/oder eine voraussichtliche Zeitspanne zu bestimmen nach der ein Störfall eintritt (z.B., Schaden des Kardangelenks in 12 Stunden). Gemäß einer Ausführungsform der Erfindung bestimmt der maschinelle Lernalgorithmus basierend auf den aktuellen Betriebsdaten 10A für jede der Betriebsstörungen (und auch für keine Betriebsstörung) eine Wahrscheinlichkeit $P\_k$ (wobei $k = 0$ für keine Betriebsstörung, und $k = 1 ... K$ für die Betriebsstörungen 30-1 ... 30-K ist), die angibt wie wahrscheinlich die Betriebsstörungen $k$ bevorsteht. Falls der trainierte maschinelle Lernalgorithmus für eine

Betriebsstörung $k$ eine Wahrscheinlichkeit $P\_k$ bestimmt, die größer als ein Grenzwert $P\_G$ ist, kann eine Benachrichtigung 70 erzeugt werden, die auf eine Betriebsstörung hinweist. Die Benachrichtigung 70 kann beispielsweise die erkannte Betriebsstörung $k$ (z.B., den Ort an der Vorrichtung und die Art der Betriebsstörung) enthalten und/oder eine voraussichtliche Zeitspanne (z.B., wie viele Stunden noch verbleiben oder wie viele Produkteinheiten noch produziert werden können) bis zum Eintritt eines mit der Betriebsstörung verbundenen Störfalls der Vorrichtung 10A. Des Weiteren, kann die Benachrichtigung auch eine Wartungsmaßnahme beinhalten, die durchzuführen ist, um die Betriebsstörung zu beheben und/oder eine Dauer dieser Wartungsmaßnahme. Zum Beispiel kann die Benachrichtigung 70 an einen Betreiber der Vorrichtung und/oder an Wartungspersonal gesendet werden. Der trainierte maschinelle Lernalgorithmus 60 kann auf die Steuerung der Vorrichtung 10A oder einen zusätzlichen Industrie-PC (IPC) portiert werden. Alternativ ist es auch möglich den trainierten maschinellen Lernalgorithmus 60 in einer Cloud anzuwenden.

Wie bereits vorangehend beschrieben ist der trainierte maschinelle Lernalgorithmus 60, der auf den Simulationsdaten 20B, 40-1-1, ... 40-K-N des digitalen Zwillings 10B trainiert wurde, in der Lage eine Betriebsstörung der Vorrichtung 10A zu erkennen. Dies hat den Vorteil, dass die Betriebsstörungen (und eventuell damit verbundene Störfälle) nicht auf der realen Vorrichtung 10A eintreten müssen (um die mit der Betriebsstörungen verbundenen Betriebsdaten für das Training des maschinellen Lernalgorithmus zu erhalten), sondern mittels des digitalen Zwillings simuliert werden können.

Zusätzlich ist es mögliche eine Vielzahl von Simulationsdaten für jede der Betriebsstörungen 30-1 ... 30-K zu erzeugen, was die Präzision des trainierten maschinellen Lernalgorithmus beim Erkennen einer Betriebsstörung verbessert. Dies ermöglicht es auch die Anzahl zusätzlicher Sensoren, wie sie im Stand der Technik eingesetzt werden um die vorausschauende Wartung zu verbessern, zu reduzieren, oder ganz auf zusätzliche Sensoren zu verzichten.

Gemäß einer weiteren Ausführungsform der Erfindung wird der digitale Zwilling 10B dazu benutzt einen (oder mehrere) zusätzlichen Sensor zu bestimmen, der das Vorhersagen einer Betriebsstörung (gemäß der vorliegenden Erfindung) optimal verbessert. Zu diesem Zweck können dem digitalen Zwilling 10B verschiedene zusätzliche Sensoren (wie z.B., ein Schwingungs-, Stromstärke-, Drehmoment-, Temperatur-, oder Beschleunigungssensor) an verschiedenen Stellen hinzugefügt werden. Der Einfluss dieser zusätzlichen Sensoren auf das Erkennen einer Betriebsstörung (wie vorangehend beschrieben) kann dann verglichen werden und unter den zusätzlichen Sensoren können einer oder mehrere ausgewählt werden, die das Vorhersagen der Betriebsstörung optimal verbessern. Diese ausgewählten Sensoren des digitalen Zwillings 10B können dann auch an die (reale) Vorrichtung 10A angebracht werden, um das Erkennen einer Betriebsstörung der Vorrichtung 10A zu verbessern. In anderen Worten, verschiedene zusätzliche Sensoren können mittels des digitalen Zwillings 10B simuliert und im Hinblick auf ihren Informationsgehalt für das Erkennen der auf dem digitalen Zwilling simulierten Betriebsstörungen 30-1 ... 30-K verglichen werden. Auf diese Weise können verschiedene Sensoren wie z.B., ein Schwingungs-, Stromstärke-, Drehmoment-, Temperatur-, oder Beschleunigungssensor an verschiedenen Stellen des digitalen Zwillings 10B (der ein eins-zu-eins Abbild der Vorrichtung 10A ist) appliziert werden und (mittels Simulation durch den digitalen Zwillings) getestet werden, welcher Sensor an welcher Stelle der Vorrichtung ein Ausganssignal liefert, das die Präzision des auf diesen Simulationsdaten trainierten maschinellen Lernalgorithmus optimal verbessert (im Vergleich zu anderen zusätzlichen Sensoren des digitalen Zwillings und im Vergleich zum Verwenden keiner zusätzlichen Sensoren).

Werden beispielsweise Z zusätzliche Sensoren (an Z Stellen des digitalen Zwillings) angebracht und hat der digitale Zwilling X betriebsbedingte Sensoren (also Sensoren, die ohnehin schon vorhanden sind und keine zusätzlichen Sensoren sind) so liefert der digitale Zwilling für jeden Simulationsdurchlauf Z+X Ausganssignale als Simulationsdaten. Der digitale Zwilling (mit den Z zusätzlichen Sensoren) kann nun wie im Zusammenhang mit **Fig. 3** beschrieben für die K Störfälle 30-1 ... 30-K mit jeweils N Simulationsdurchläufen simuliert werden. Dies liefert ähnlich wie oben beschrieben Simulationsdaten mit K x N x (X+Z) einzelnen Ausganssignalen. Im Anschluss können Z+1 verschiedene trainierte maschinelle Lernalgorithmen erzeugt werden, indem ein maschineller Lernalgorithmus auf den Simulationsdaten ohne den Ausganssignalen der zusätzlichen Sensoren trainiert wird und indem für jeden der Z zusätzlichen Sensoren ein maschineller Lernalgorithmus mit dem jeweiligen Ausganssignal eines der Z zusätzlichen Sensoren trainiert wird. Im Anschluss kann die Präzision (wie z.B. der optimierte Fehlerterm des trainierten maschinellen Lernalgorithmus oder das Bayesche Informationskriterium) der Z+1 trainierten maschinellen Lernalgorithmen miteinander verglichen werden. Der zusätzliche Sensor, der zu dem trainierten maschinellen Lernalgorithmus mit der besten Präzision (z.B. dem geringsten Fehlerterm) geführt hat (oder die n zusätzlichen Sensoren die zu den n besten trainierten Lernalgorithmen geführt haben) kann dann ausgewählt werden und der gleiche Sensor kann dann auch an der gleichen Stelle (wie am digitalen Zwilling) an der realen Vorrichtung angebracht werden und zum Erkennen einer Betriebsstörung der Vorrichtung erfindungsgemäß verwendet werden.

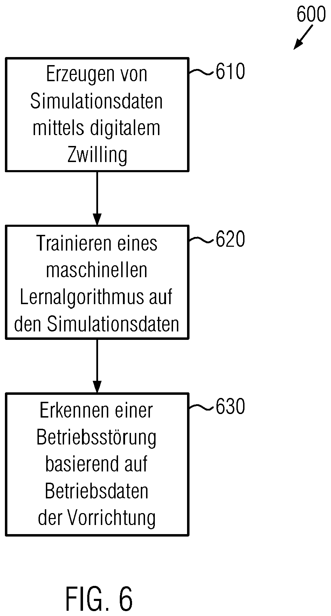

Die **Fig. 6** zeigt ein erfindungsgemäßes Verfahren 600 zum automatischen Erkennen einer Betriebsstörung einer Vorrichtung (10A) in der Lebensmittelindustrie oder der Getränkemittelindustrie, insbesondere zur vorausschauenden Wartung. In einem ersten Schritt 610 werden Simulationsdaten 20B, 40-1-1, 40-2-1, ..., 40-K-N mittels des digitalen Zwillings 10B der Vorrichtung 10A erzeugt. Dabei werden die Simulationsdaten für eine Vielzahl von Betriebsstörungen 30-1-1, 30-2-1, ..., 30-K-N des digitalen Zwillings 10B erzeugt. In einem zweiten Schritt 620 wird der maschinelle Lernalgorithmus 50 basierend auf den Simulationsdaten 20B, 40-1-1, 40-2-1, ..., 40-K-N des digitalen Zwillings 10B und der Vielzahl von simulierten Betriebsstörungen 30-1-1, 30-2-1, ..., 30-K-N trainiert um einen trainierten maschinellen Lernalgorithmus 60 zu erzeugen. Dieser trainierte maschinelle Lernalgorithmus 60 wird dann zum Erkennen der Betriebsstörung der (realen) Vorrichtung 10A basierend auf Betriebsdaten 20A der (realen) Vorrichtung benutzt.

Gemäß einer weiteren Ausführungsform der Erfindung (welche mit allen oben beschriebenen Merkmalen kombiniert werden kann) kann das Vorhersagen einer Betriebsstörung auch dazu benutzt werden, den Produktionsplan einer Anlage mit einer oder mehreren Produktionslinien (z.B. der Lebensmittelindustrie und insbesondere der Getränkemittelindustrie) zu optimieren. In diesem Fall können die Informationen darüber, dass eine Wartungsmaßnahme für eine Vorrichtung einer Linie der Anlage bevorsteht, welche Wartungsmaßnahme bevorsteht (also wie lange die Wartungsmaßnahme dauert) und/oder in welchem Zeitfenster die Wartungsmaßnahme durchgeführt werden muss (also wie viel Zeit verbleibt oder wie viele Produkte noch produziert werden können, bevor die Wartungsmaßnahme spätestens durchgeführt werden muss, um einen Störfall zu verhindern) dazu verwendet werden, den Produktionsplan der Anlage zu optimieren. Diese Informationen, die durch das erfindungsgemäße Erkennen einer Betriebsstörung zur Verfügung stehen können so in die automatische Optimierung des Produktionsplans der Anlage mit einfließen.

Grundsätzlich werden gemäß der hier beschriebenen Ausführungsform der Erfindung für die automatische Produktionsplanung Auslastungsvorhersagen der Anlage verwendet (welche mit den Informationen über die vorausschauende Wartung ergänzt werden können). Das automatische Bestimmen eines optimalen Produktionsplans umfasst das Unterteilen des Produktionsplans in einzelne Einheiten und das Ermitteln einer optimalen Reihenfolge für die Einheiten des Produktionsplans. So wird beim Bestimmen des optimalen Produktionsplans beispielsweise berücksichtig wie lange die Produktionszeit ist, wie lange die Nachrüstzeit ist, und wie lange die Wechseldauer ist (welche z.B., Produktwechsel, Flaschenwechsel und/oder Verpackungswechsel beinhaltet). Basierend auf diesen Informationen wird automatisch ein optimaler Produktionsplan erstellt, der die Zeit minimiert, die es benötigt alle geplanten Produkte (in jeweils einer bestimmten Stückzahl) zu produzieren. Ein optimaler Produktionsplan sorgt dafür, dass die Anlage nur möglichst kurz still steht und erhöht somit das Produktionsvolumen der Anlage.

In einem ersten Schritt erfolgt eine Optimierung der Wechseldauer des Produktionsplans mit dem Ziel, die Wechsel, die am längsten dauern, zu minimieren. Die Wechseldauer kann die Dauer aller für einen Wechsel nötigen Tätigkeiten umfassen, wie z.B. einen Produktwechsel, Flaschenwechsel, Sortenwechsel, Formatwechsel und/oder Packwechsel. Der Produktionsplan wird dabei in kleine, zusammenhängende Einheiten zerlegt und diese werden so angeordnet dass die Gesamtwechseldauer minimiert wird. Jede Einheit kann dabei mindestens einem Produkt, einem Verarbeitungsschritt oder mindestens einer Vorrichtung einer Produktionslinie zur Produktion eines Produktes des Produktionsplans entsprechen. Optional kann hierbei zusätzlich die Wartungsdauer, die vom oben beschriebenen trainierten maschinellen Lernalgorithmus 60 bestimmt wird, berücksichtigt werden. Insbesondere können die Informationen darüber wie lange eine Wartung dauert und/oder der Zeitraum, wann die Wartung durchgeführt werden muss in die Optimierung der Wechseldauer des Produktionsplans einfließen. So ist es zum Beispiel möglich, die Wartungszeit einer Vorrichtung so zu legen, dass sie mit der Wechselzeit der Anlage, zu der diese Vorrichtung gehört, zusammen fällt. So kann zur gleichen Zeit gewartet werden, zu der auch der Wechsel eines Produkts stattfindet.

In einem zweiten Schritt kann die Optimierung der Produktionskosten des Produktionsplans erfolgen. Basierend auf dem ersten Schritt kann die Optimierung der Wechseldauer um die kostenoptimierte Zuordnung der Einheiten des Produktionsplans zu den einzelnen Produktionslinien der Anlage erweitert werden. Dabei kann eine Optimierung des Produktionsplans nach minimalen Produktionskosten K erfolgen, die für die Abarbeitung der Einheiten des Produktionsplans aufzuwenden sind. Dabei ist

$$K = \sum_{i=1}^{n} H_i * t_{ges,max} \text{ (Eq. 1)},$$

wobei n die Anzahl an Linien ist, $H_i$ der Maschinenstundensatz der Linie i in Euro pro Stunde und $t_{ges,max}$ die maximale Produktionszeit an einer Linie in Stunden ist.

Die Produktionszeit an der Linie i $t_{i,ges}$ berechnet sich aus:

$$t_{i,ges} = t_{Nach,i,ges} + t_{Pro,i,ges} \text{ (Eq. 2)},$$

wobei $t_{Nach,i,ges}$ die Nachrüstzeit der Linie i in Stunden angibt und $t_{pro,i,ges}$ die Produktionszeit der Linie i in Stunden angibt.

Die Nachrüstzeit der Linie i $t_{Nach,i,ges}$ berechnet sich dabei beispielsweise wie folgt:

$$t_{Nach,i,ges} = sume\left(M_{1,i}.* S_i\right) + sume\left(M_{2,i}.* S_i\right) + sume\left(M_{3,i}.* S_i\right) \text{ (Eq. 3)},$$

wobei $M_{1,i}$, $M_{2,i}$, $M_{3,i}$ die Nachrüstzeit-Matrizen für Linie i ist (in diesem Beispiel gibt es 3 Nachrüstzeit-Matrizen; mehr oder weniger als 3 Matrizen sind aber auch möglich), $S_i$ ist die Zustandswechsel-Matrix für Linie i und sume bedeutet die Summe über alle Elemente der Matrix.

Die Produktionszeit der Linie i $t_{Pro,i,ges}$ berechnet sich in diesem Beispiel wie folgt:

$$t_{Pro,i,ges} = sum(t_{Pro,i}.* z_{akt,i}) \text{ (Eq. 4)},$$

wobei $t_{Pro,i} = \begin{pmatrix} t_{Pro,i,1} \\ t_{Pro,i,2} \\ t_{Pro,i,3} \end{pmatrix}$ mit $t_{Pro,i,j}$ als der Produktionszeit eines Zustands j auf Linie i in Stunden (in diesem Beispiel gibt es 3 Zustände j = 1, 2, 3; mehr oder weniger Zustände sind aber auch möglich; insbesondere können für unterschiedliche Linien i auch unterschiedlich viele Zustände vorliegen), $z_{akt,i}$ ein Vektor mit allen ausgewählten Zuständen auf Linie i ist mit $z_{akt,i} = (sum(S_i, 2) + sum(S_i, 1)^T)./(sum(S_i, 2) + sum(S_i, 1)^T$, und sum die Berechnung der Summe der Elemente eines Vektors angibt (z.B., in einem Rechentool wie Matlab).

Wie bereits eingehend erwähnt kann an dieser Stelle optional die Information darüber wie lange eine (oder mehrere) Vorrichtung einer der Linien i noch betrieben werden kann, bevor ein mit einer (durch den trainierten maschinellen Lernalgorithmus 60 vorhergesagten) Betriebsstörung zusammenhängender Störfall eintritt, verwendet werden. So kann z.B. die Information darüber, dass eine Vorrichtung nur noch eine gewisse Anzahl von Produkteinheiten verarbeiten kann (oder nur noch eine gewisse Zeitdauer laufen kann), bevor der Störfall eintritt, als zusätzliche Randbedingung während der Optimierung des Produktionsplans verwendet werden.

Aus der Optimierung resultiert so eine Zuordnung der Einheiten (des Produktionsplans) zu den einzelnen Linien und zusätzlich eine Reihenfolge, in der die Einheiten des Produktionsplans auf den einzelnen Linien abgearbeitet werden sollen, um eine maximale Produktionseffizienz der gesamten Anlage und damit einen minimalen Kostenaufwand zu erzielen. Die Nachrüstzeit und die Produktionszeit können dabei produkt- und linienabhängig definiert sein, sodass die Spezifikationen der Anlage bei der Ermittlung des optimierten Produktionsplans berücksichtigt werden. Schließlich kann ein optimaler Produktionsplan bestimmt werden, der die Zeit minimiert, die es benötigt alle geplanten Produkte zu produzieren. Dadurch wird ein optimales Auslegen der Anlage ermöglicht.

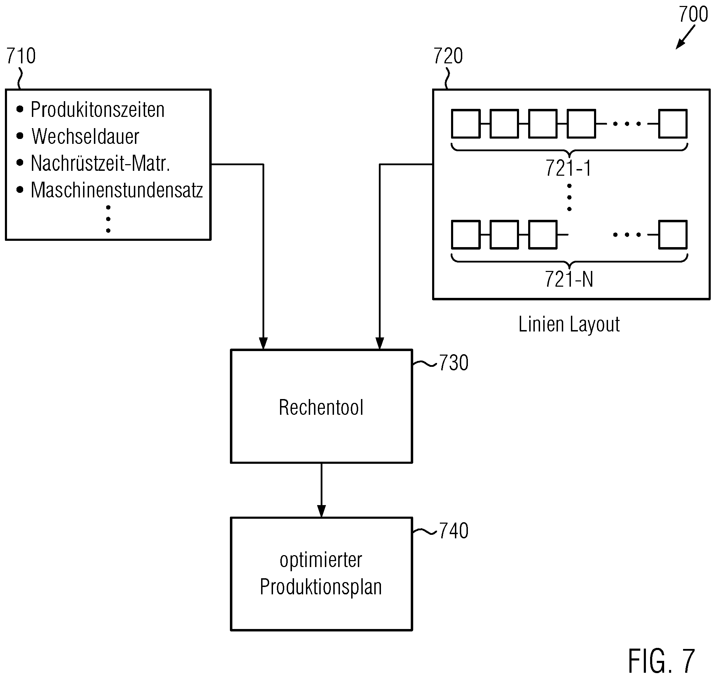

Dies ist beispielhaft in der **Fig. 7** gezeigt, wo die Wechseldauer, die Produktionszeiten jedes Zustands j jeder Linie i $t_{Pro,i,j}$ , die Nachrüstzeit-Matrizen $M_{j,i}$ und der Maschinenstundensatz $H_i$ als erster Eingang 710 sowie das Linienlayout der Anlage als zweiter Eingang 720 an ein Rechentool 730 vorgesehen sind. Wie oben beschrieben, kann der erste Eingang 710 auch optional die Wartungszeit, die mit Hilfe des auf Simulationsdaten des digitalen Zwillings 10B trainierten maschinellen Lernalgorithmus 60 bestimmt wird, und/oder die Zeit bis diese Wartungsmaßnahme durchgeführt werden muss umfassen. Das Rechentool 730 bestimmt dann basierend auf dem ersten Eingang 710 und dem zweiten Eingang 720, einen optimalen Produktionsplan 740. Der optimale Produktionsplan umfasst auf welcher Linie und in welcher Reihenfolge die einzelnen Einheiten des Produktionsplans gefahren werden sollen, so dass die Produktionskosten K minimiert sind.

In den oben beschriebenen Optimierungsprozess fließen die Wechseldauer sowie die Produktions- und Nachrüstzeiten für die Einheiten (des Produktionsplan) ein. Wie oben beschrieben, können hier zusätzlich die Informationen über bevorstehende Wartungsmaßnahmen (also ob und welche Wartungsmaßnahme für eine bestimmte Vorrichtung der Anlage bevorsteht, wie lange diese Wartungsmaßnahme dauert und/oder wie viel Zeit bleibt, die Wartungsmaßnahme durchzuführen, um die Betriebsstörung zu vermeiden) einfließen. Gemäß der hier vorliegenden Ausführungsform ist es möglich Wartungsmaßnahmen der vorausschauenden Wartung an einer Vorrichtung der Anlage dann durchzuführen, wenn die Anlage ohnehin still steht (z.B., wenn gerade ein Wechsel stattfindet). So ist es möglich die Dauer einer Wartungsmaßnahme in die Optimierung des Produktionsplans mit einfließen zu lassen.

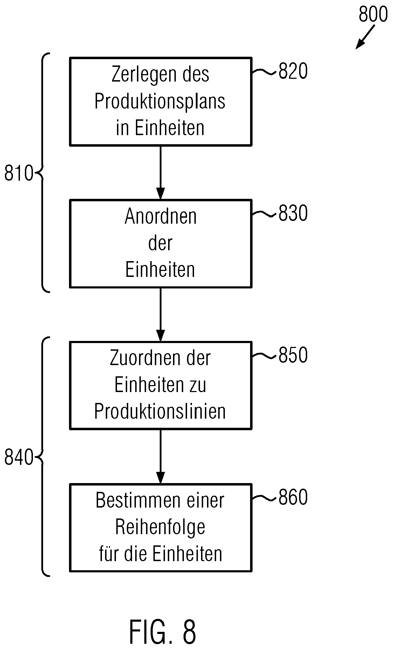

Die Fig. 8 zeigt ein Verfahren 800 gemäß einer Ausführungsform, die nicht Teil der Erfindung ist, zum Bestimmen eines optimierten Produktionsplans 740 für die Produktion eines oder mehrerer Produkte mittels einer oder mehrerer Produktionslinien 721-1, ..., 721-N in der Lebensmittelindustrie oder der Getränkemittelindustrie. In einem ersten Schritt 810 wird die Wechseldauer des Produktionsplans optimiert. Dieser erste Schritt 810 umfasst das Zerlegen 820 des Produktionsplans in eine Vielzahl von zusammenhängenden Einheiten, und das Anordnen 830 der Einheiten, so dass die Wechseldauer einen minimalen Wert hat. Wie oben beschrieben kann dieser erste Schritt 810 zusätzlich basierend auf eine Dauer einer Wartungsmaßnahme für eine erkannte Betriebsstörung einer Vorrichtung 10A einer Produktionslinie der Vielzahl von Produktionslinien 721-1, ..., 721-N durchgeführt werden.

Im Anschluss werden in einem zweiten Schritt 840 die Produktionskosten, die für die Abarbeitung der Einheiten aufzuwenden sind, optimiert. Dieser zweite Schritt 840 umfasst das Zuordnen 850 der Einheiten zu jeweils einer Produktlinie, und das Bestimmen 860 einer Reihenfolge, in der die Einheiten auf den Produktionslinien abzuarbeiten sind. Wie bereits oben beschrieben kann dieser zweite Schritt 840 zusätzlich basierend auf einer voraussichtlichen Dauer bis zum Eintritt des vorhergesagten Störfalls durchgeführt werden (die mittels des trainierten maschinellen Lernalgorithmus 60 bestimmt wurde).

Es wird ferner darauf hingewiesen, dass in den zuvor beschriebenen Ausführungsformen genannte Merkmale nicht auf diese speziellen Kombinationen beschränkt sind, sondern auch in beliebigen anderen Kombinationen als weitere Ausführungsformen möglich sind.

**Patentansprüche**

1. Verfahren (600) zum automatischen Erkennen einer Betriebsstörung einer Vorrichtung (10A) in der Lebensmittelindustrie oder der Getränkemittelindustrie, insbesondere zur vorausschauenden Wartung, wobei das Verfahren umfasst:

   Erzeugen (610) von Simulationsdaten (20B; 40-1-1, 40-2-1, ..., 40-K-N) mittels eines digitalen Zwillings (10B) der Vorrichtung, wobei die Simulationsdaten für eine Vielzahl von Betriebsstörungen (30-1, 30-2, ..., 30-K) erzeugt werden;
   Trainieren (620) eines maschinellen Lernalgorithmus (50) basierend auf den Simulationsdaten und der Vielzahl von Betriebsstörungen, um einen trainierten maschinellen Lernalgorithmus (60) zu erzeugen;
   Erkennen (630) einer Betriebsstörung der Vorrichtung (10A) durch den trainierten maschinellen Lernalgorithmus (60) basierend auf Betriebsdaten (20A) der Vorrichtung.

2. Verfahren (600) nach Anspruch 1, wobei die erkannte Betriebsstörung der Vorrichtung (10A) ein Ereignis, ein Störfall und/oder eine vorzunehmende Wartungsmaßnahme ist, wobei insbesondere:

   das Ereignis eine erhöhte Reibung, eine erhöhte Schwingung, eine Unwucht, ein Verschleißparameter, oder eine verringerte Schmierwirkung umfasst,
   der Störfall einen Motorschaden, einen Lagerschaden, einen Achsenbruch, einen Riss, eine falsch positionierte Flasche, einen Kurzschluss, ein Stoppen der Vorrichtung oder jede andere Form der mechanischen Beschädigung umfasst, und

die vorzunehmende Wartungsmaßnahme ein Reinigen, ein Schmieren, ein Ölen, ein Befestigen, ein Justieren, ein Austauchen oder ein Reparieren umfasst; und/oder

wobei das Erkennen (630) der Betriebsstörung ferner ein Erkennen einer Komponente der Vorrichtung, an welcher die Betriebsstörung auftritt, umfasst.

3. Verfahren (600) nach Anspruch 1 oder 2, wobei das Erkennen (630) der Betriebsstörung ferner ein Erkennen einer voraussichtlichen Zeitspanne bis zum Eintreten eines durch die Betriebsstörung herbeigeführten Störfalls umfasst.

4. Verfahren (600) nach Anspruch 3, wobei ein Produktionsplan (740) einer der Vorrichtung (10A) zugeordneten Anlage basierend auf der voraussichtlichen Zeitspanne und/oder auf einer Dauer einer vorzunehmenden Wartungsmaßnahme für die erkannte Betriebsstörung bestimmt wird.

5. Verfahren (600) nach einem der Ansprüche 1 bis 4, wobei die Betriebsdaten (20A) Ausgangssignale der Vorrichtung (10A) umfassen, wobei die Simulationsdaten (20B, 40-1-1, 40-2-1, ..., 40-K-N) Ausgangssignale des digitalen Zwillings (10B) umfassen, und wobei jedes der Ausgangssignale des digitalen Zwillings einem jeweiligen Ausgangsignal der Vorrichtung entsprechen; und

wobei jedes der Ausgangssignale der Vorrichtung (10A) von einem Sensor der Vorrichtung gemessen wird, der beim bestimmungsgemäßen Betrieb der Vorrichtung verwendet wird.

6. Verfahren (600) nach Anspruch 5, wobei die Betriebsdaten (20A) der Vorrichtung (10A) mindestens ein zusätzliches Ausgangssignal der Vorrichtung umfassen, wobei das zusätzliche Ausgangssignal von einem zusätzlichen Sensor der Vorrichtung gemessen wird, der nicht bestimmungsgemäßen Betrieb der Vorrichtung erforderlich ist;

wobei die Simulationsdaten (20B; 40-1-1. 40-2-1, ..., 40-K-N) mindestens ein entsprechendes zusätzliches Ausganssignal des digitalen Zwillings (10B) umfassen; und

wobei der zusätzliche Sensor der Vorrichtung (10A) mittels des digitalen Zwillings (10B) so aus einer Vielzahl möglicher zusätzlicher Sensoren ausgewählt wird, dass das Ausgangssignal des zusätzlichen Sensors das Erkennen (630) der Betriebsstörung optimiert.

7. Verfahren (600) nach einem der Ansprüche 1 bis 6, wobei der trainierte maschinelle Lernalgorithmus (60) zum Erkennen der Betriebsstörung eine Wahrscheinlichkeit für jede der Betriebsstörungen (30-1, 30-2, ..., 30-K) basierend auf den Betriebsdaten (20A) der Vorrichtung (10A) bestimmt; und

wobei der trainierte maschinelle Lernalgorithmus (60) eine Betriebsstörung der Betriebsstörungen (30-1, 30-2, ... , 30-K) als die Betriebsstörung erkennt (630), wenn die Wahrscheinlichkeit der Betriebsstörung einen Grenzwert erreicht.

8. Verfahren (600) nach einem der Ansprüche 1 bis 7, wobei der maschinelle Lernalgorithmus (50) zusätzlich mit aufgezeichneten Betriebsdaten der Vorrichtung (10A) trainiert wird; und/oder

wobei die Vorrichtung (10A) ein Tripod der Lebensmittelindustrie ist.

9. System (100) zum automatischen Erkennen einer Betriebsstörung einer Vorrichtung (10A) in der Lebensmittelindustrie oder der Getränkemittelindustrie, insbesondere zur vorausschauenden Wartung, wobei das System umfasst:

einen digitalen Zwilling (10B) der Vorrichtung, wobei der digitale Zwilling eingerichtet ist zum:
Erzeugen (610) von Simulationsdaten (20B; 40-1-1, 40-2-1, ..., 40-K-N) der Vorrichtung, wobei die Simulationsdaten für eine Vielzahl von Betriebsstörungen (30-1, 30-2, ..., 30-K) des digitalen Zwillings erzeugt werden; und

einen maschinellen Lernalgorithmus (60), wobei der maschinelle Lernalgorithmus basierend auf den Simulationsdaten und den Betriebsstörungen des digitalen Zwillings trainiert (620) wird, wobei der maschinelle Lernalgorithmus eingerichtet ist zum:

Erkennen (630) einer Betriebsstörung der Vorrichtung (10A) basierend auf Betriebsdaten (20A) der Vorrichtung, und

wobei der maschinelle Lernalgorithmus von einem der folgenden Komponenten ausgeführt wird: einer Steuerung der Vorrichtung, einem mit der Vorrichtung verbundenen Prozessor, oder einer Cloud.

10. System (100) nach Anspruch 9, wobei die erkannte Betriebsstörung der Vorrichtung (10A) ein Ereignis, ein Störfall und/oder eine vorzunehmende Wartungsmaßnahme ist, wobei insbesondere:

das Ereignis eine erhöhte Reibung, eine erhöhte Schwingung, eine Unwucht, ein Verschleißparameter, oder eine verringerte Schmierwirkung umfasst,
der Störfall einen Motorschaden, einen Lagerschaden, einen Achsenbruch, einen Riss, eine falsch positionierte Flasche, einen Kurzschluss oder ein Stoppen der Vorrichtung umfasst, und
die vorzunehmende Wartungsmaßnahme ein Reinigen, ein Schmieren, ein Ölen, ein Befestigen, ein Justieren, ein Austauchen oder ein Reparieren umfasst; und/oder
wobei das Erkennen (630) der Betriebsstörung ferner ein Erkennen einer Komponente der Vorrichtung, an welcher die Betriebsstörung auftritt, umfasst.

11. System (100) nach Anspruch 9 oder 10, wobei das Erkennen (630) der Betriebsstörung ferner ein Erkennen einer voraussichtlichen Zeitspanne bis zum Eintreten eines durch die Betriebsstörung herbeigeführten Störfalls umfasst; und/oder

wobei ein Produktionsplan (740) einer der Vorrichtung (10A) zugeordneten Anlage basierend auf einer Dauer einer Wartungsmaßnahme für die vorhergesagte Betriebsstörung und der voraussichtlichen Dauer bis zum Eintritt des durch die Betriebsstörung herbeigeführten Störfalls bestimmt wird; und/oder
wobei die Betriebsdaten (20A) Ausgangssignale der Vorrichtung (10A) umfassen, wobei die Simulationsdaten (20B, 40-1-1, 40-2-1, ..., 40-K-N) Ausgangssignale des digitalen Zwillings (10B) umfassen, und wobei jedes der Ausgangssignale des digitalen Zwillings einem jeweiligen Ausgangsignal der Vorrichtung entsprechen; und wobei jedes der Ausgangssignale der Vorrichtung (10A) von einem Sensor der Vorrichtung gemessen wird, der beim bestimmungsgemäßen Betrieb der Vorrichtung verwendet wird.

12. Maschineller Lernalgorithmus (60) zum automatischen Erkennen einer Betriebsstörung einer Vorrichtung (10A) in der Lebensmittelindustrie oder der Getränkemittelindustrie, insbesondere zur vorausschauenden Wartung, wobei der maschinelle Lernalgorithmus basierend auf Simulationsdaten (20B; 40-1-1, 40-2-1, ..., 40-K-N) und vordefinierten Schadensklassen (30-1, 30-2, ..., 30-K) eines digitalen Zwillings (10B) der Vorrichtung trainiert wird, wobei der maschinelle Lernalgorithmus zum Erkennen einer Betriebsstörung der Vorrichtung basierend auf Betriebsdaten (20A) der Vorrichtung eingerichtet ist.

## Claims

1. A method (600) for automatically detecting a malfunction of a device (10A) in the food industry or the beverage industry, in particular for predictive maintenance, the method comprising:

generating (610) simulation data (20B; 40-1-1, 40-2-1, ..., 40-K-N) by means of a digital twin (10B) of the device, wherein the simulation data are generated for a plurality of malfunctions (30-1, 30-2, ..., 30-K);
training (620) a machine learning algorithm (50) based on the simulation data and the plurality of malfunctions for generating a trained machine learning algorithm (60);
detecting (630) a malfunction of the device (10A) by the trained machine learning algorithm (60) based on operational data (20A) of the device.

2. The method (600) according to claim 1, wherein the detected malfunction of the device (10A) is an event, a failure and/or a maintenance operation to be performed, wherein in particular:

the event comprises an increased friction, an increased vibration, an imbalance, a wear parameter, or a reduced lubricating effect,
the failure comprises an engine damage , a bearing damage , an axle break, a crack, a misplaced bottle, a short circuit, a device stoppage or any other form of mechanical damage, and
the maintenance operation to be performed comprises a cleaning operation, a lubricating operation, an oiling operation, a fixing operation, an adjustment operation, a replacement operation or a repairing operation; and/or
wherein detecting (630) the malfunction further comprises detecting a component of the device at which the malfunction occurs.

3. The method (600) according to claims 1 or 2, wherein detecting (630) the malfunction further comprises detecting an expected period of time until the occurrence of a failure caused by the malfunction.

4. The method (600) according to claim 3, wherein a production schedule (740) of a plant associated with the device (10A) is determined based on the expected period of time and/or on a duration of a maintenance operation to be performed for the detected malfunction.

5. The method (600) according to any one of claims 1 to 4, wherein the operational data (20A) comprise output signals of the device (10A), wherein the simulation data (20B, 40-1-1, 40-2-1, ..., 40-K-N) comprise output signals of the digital twin (10B), and wherein each of the output signals of the digital twin corresponds to a respective output signal of the device; and
wherein each of the output signals of the device (10A) is measured by a sensor of the device used in the regular operation of the device.

6. The method (600) according to claim 5, wherein the operational data (20A) of the device (10A) comprise at least one additional output signal of the device, wherein the additional output signal is measured by an additional sensor of the device which is required for non-regular operation of the device;

   wherein the simulation data (20B; 40-1-1. 40-2-1, ..., 40-K-N) comprise at least one respective additional output signal of the digital twin (10B); and
   wherein the additional sensor of the device (10A) is selected from a plurality of optional additional sensors by means of the digital twin (10B) such that the output signal of the additional sensor optimizes the detection (630) of the malfunction.

7. The method (600) according to any one of claims 1 to 6, wherein the trained machine learning algorithm (60) for recognizing the malfunction determines a probability for each of the malfunctions (30-1, 30-2, ..., 30-K) based on the operational data (20A) of the device (10A); and
wherein the trained machine-learning algorithm (60) detects a malfunction of the malfunctions (30-1, 30-2, ..., 30-K) as the malfunction (630) when the probability of the malfunction reaches a threshold.

8. The method (600) according to any one of claims 1 to 7, wherein the machine learning algorithm (50) is additionally trained with recorded operational data of the device (10A); and/or
wherein the device (10A) is a tripod for the food industry.

9. A system (100) for automatically detecting a malfunction of a device (10A) in the food industry or the beverage industry, in particular for predictive maintenance, the system comprising:

   a digital twin (10B) of the device, wherein the digital twin is configured for
   generating (610) simulation data (20B; 40-1-1, 40-2-1, ..., 40-K-N) of the device, wherein the simulation data are generated for a plurality of malfunctions (30-1, 30-2, ..., 30-K) of the digital twin; and
   a machine learning algorithm (60), wherein the machine learning algorithm is trained (620) based on the simulation data and the malfunctions of the digital twin, wherein the machine learning algorithm is configured for

      detecting (630) a malfunction of the device (10A) based on operational data (20A) of the device, and
      wherein the machine learning algorithm is executed by one of a controller of the device, a processor coupled to the device, or a cloud.

10. The system (100) according to claim 9, wherein the detected malfunction of the device (10A) is an event, a failure and/or a maintenance operation to be performed, wherein in particular:

    the event comprises an increased friction, an increased vibration, an imbalance, a wear parameter, or a reduced lubricating effect,
    the failure comprises an engine damage, a bearing damage , an axle break, a crack, a misplaced bottle, a short circuit, a device stoppage or any other form of mechanical damage, and
    the maintenance operation to be performed comprises a cleaning operation, a lubricating operation, an oiling operation, a fixing operation, an adjustment operation, a replacement operation or a repairing operation; and/or
    wherein detecting (630) the malfunction further comprises detecting a component of the device at which the malfunction occurs.

11. The system (100) according to claims 9 or 10, wherein detecting (630) the malfunction further comprises detecting an expected period of time until the occurrence of a failure caused by the malfunction; and/or

wherein a production schedule (740) of a plant (10A) associated with the device (10A) is determined based on a duration of a maintenance operation for the predicted malfunction and the expected period of time until the occurrence of the failure caused by the malfunction; and/or

wherein the operational data (20A) comprise output signals of the device (10A), wherein the simulation data (20B, 40-1-1, 40-2-1, ..., 40-K-N) comprise output signals of the digital twin (10B), and wherein each of the output signals of the digital twin corresponds to a respective output signal of the device; and

wherein each of the output signals of the device (10A) is measured by a sensor of the device used in the regular operation of the device.

12. Machine learning algorithm (60) for automatically detecting a malfunction of a device (10A) in the food industry or the beverage industry, in particular for predictive maintenance, wherein the machine learning algorithm is trained based on simulation data (20B; 40-1-1, 40-2-1, ...., 40-K-N) and predefined damage classes (30-1, 30-2, ..., 30-K) of a digital twin (10B) of the device, wherein the machine learning algorithm is configured for detecting a malfunction of the device based on operational data (20A) of the device.

## Revendications

1. Procédé (600) de détection automatique d'un dysfonctionnement d'un dispositif (10A) dans l'industrie des denrées alimentaires ou l'industrie des boissons, en particulier pour une maintenance prévisionnelle, dans lequel le procédé comprend les étapes consistant à :

générer (610) des données de simulation (20B ; 40-1-1, 40-2-1, ..., 40-K-N) au moyen d'un jumeau numérique (10B) du dispositif, dans lequel les données de simulation sont générées pour une pluralité de dysfonctionnements (30-1, 30-2,..., 30-K) ;
entraîner (620) un algorithme d'apprentissage automatique (50) sur la base des données de simulation et de la pluralité de dysfonctionnements pour générer un algorithme d'apprentissage automatique entraîné (60) ;
détecter (630) un dysfonctionnement du dispositif (10A) par l'intermédiaire de l'algorithme d'apprentissage automatique formé (60) sur la base de données de fonctionnement (20A) du dispositif.

2. Procédé (600) selon la revendication 1, dans lequel le dysfonctionnement détecté du dispositif (10A) est un événement, une panne et/ou une mesure de maintenance à effectuer, dans lequel en particulier :

l'événement comprend une friction accrue, une vibration accrue, un déséquilibre, un paramètre d'usure ou un effet de lubrification réduit,
la panne comprend une défaillance de moteur, une défaillance de roulement, une rupture d'axe, une fissure, un flacon mal positionné, un court-circuit, un arrêt du dispositif ou toute autre forme de dommage mécanique, et
la mesure de maintenance à effectuer comprend un nettoyage, une lubrification, un huilage, une fixation, un ajustement, un remplacement ou une réparation ; et/ou
dans lequel la détection (630) du dysfonctionnement comprend en outre la détection d'un composant du dispositif au niveau duquel le dysfonctionnement se produit.

3. Procédé (600) selon la revendication 1 ou 2, dans lequel la détection (630) du dysfonctionnement comprend en outre une détection d'une période probable jusqu'à la survenance d'une panne provoquée par le dysfonctionnement.

4. Procédé (600) selon la revendication 3, dans lequel un plan de production (740) d'une installation associée au dispositif (10A) est déterminé sur la base de la période probable et/ou d'une durée d'une mesure de maintenance à effectuer pour le dysfonctionnement détecté.

5. Procédé (600) selon l'une quelconque des revendications 1 à 4, dans lequel les données de fonctionnement (20A) comprennent des signaux de sortie du dispositif (10A), dans lequel les données de simulation (20B, 40-1-1, 40-2-1, ..., 40-K-N) comprennent des signaux de sortie du jumeau numérique (10B), et dans lequel chacun des signaux de sortie du jumeau numérique correspond à un signal de sortie respectif du dispositif ; et
dans lequel chacun des signaux de sortie du dispositif (10A) est mesuré par un capteur du dispositif qui est utilisé lors du fonctionnement prévu du dispositif.

6. Procédé (600) selon la revendication 5, dans lequel les données de fonctionnement (20A) du dispositif (10A) comprennent au moins un signal de sortie supplémentaire du dispositif, dans lequel le signal de sortie supplémentaire

EP 4 000 018 B1

est mesuré par un capteur supplémentaire du dispositif qui n'est pas nécessaire au fonctionnement prévu du dispositif ;

dans lequel les données de simulation (20B ; 40-1-1, 40-2-1, ..., 40-K-N) comprennent au moins un signal de sortie supplémentaire correspondant du jumeau numérique (10B) ; et
dans lequel le capteur supplémentaire du dispositif (10A) est sélectionné au moyen du jumeau numérique (10B) parmi une pluralité de capteurs supplémentaires possibles de sorte que le signal de sortie du capteur supplémentaire optimise la détection (630) du dysfonctionnement.

7. Procédé (600) selon l'une quelconque des revendications 1 à 6, dans lequel l'algorithme d'apprentissage automatique entraîné (60) pour détecter le dysfonctionnement détermine une probabilité pour chacun des dysfonctionnements (30-1, 30-2,..., 30-K) sur la base des données de fonctionnement (20A) du dispositif (10A) ; et
dans lequel l'algorithme d'apprentissage automatique entraîné (60) détecte (630) un dysfonctionnement parmi les dysfonctionnements (30-1, 30-2,... , 30-K) comme étant le dysfonctionnement lorsque la probabilité du dysfonctionnement atteint une valeur limite.

8. Procédé (600) selon l'une quelconque des revendications 1 à 7, dans lequel l'algorithme d'apprentissage automatique (50) est en outre entraîné avec des données de fonctionnement enregistrées du dispositif (10A) ; et/ou
dans lequel le dispositif (10A) est un tripode de l'industrie des denrées alimentaires.

9. Système (100) de détection automatique d'un dysfonctionnement d'un dispositif (10A) dans l'industrie des denrées alimentaires ou l'industrie des boissons, en particulier pour une maintenance prévisionnelle, dans lequel le système comprend :

un jumeau numérique (10B) du dispositif, dans lequel le jumeau numérique est configuré pour :
générer (610) des données de simulation (20B ; 40-1-1, 40-2-1, ..., 40-K-N) du dispositif, dans lequel les données de simulation sont générées pour une pluralité de dysfonctionnements (30-1, 30-2,..., 30-K) du jumeau numérique ; et
un algorithme d'apprentissage automatique (60), dans lequel l'algorithme d'apprentissage automatique est entraîné (620) sur la base des données de simulation et des dysfonctionnements du jumeau numérique, dans lequel l'algorithme d'apprentissage automatique est configuré pour :

détecter (630) un dysfonctionnement du dispositif (10A) sur la base de données de fonctionnement (20A) du dispositif, et
dans lequel l'algorithme d'apprentissage automatique est exécuté par l'un des composants suivants : une commande du dispositif, un processeur connecté au dispositif ou un Cloud.

10. Système (100) selon la revendication 9, dans lequel le dysfonctionnement détecté du dispositif (10A) est un événement, une panne et/ou une mesure de maintenance à effectuer, dans lequel en particulier :

l'événement comprend une friction accrue, une vibration accrue, un déséquilibre, un paramètre d'usure ou un effet de lubrification réduit,
la panne comprend un flacon mal positionné, un court-circuit ou un arrêt du dispositif, et
la mesure de maintenance à effectuer comprend un nettoyage, une lubrification, un huilage, une fixation, un ajustement, un remplacement ou une réparation ; et/ou
dans lequel la détection (630) du dysfonctionnement comprend en outre la détection d'un composant du dispositif au niveau duquel le dysfonctionnement se produit.

11. Système (100) selon la revendication 9 ou 10, dans lequel la détection (630) du dysfonctionnement comprend en outre une détection d'une période prévisible jusqu'à la survenance d'une panne provoquée par le dysfonctionnement ; et/ou

dans lequel un plan de production (740) d'une installation associée au dispositif (10A) est déterminé sur la base d'une durée d'une mesure de maintenance pour le dysfonctionnement prévu et de la durée prévisible jusqu'à la survenance de la panne provoquée par le dysfonctionnement ; et/ou
dans lequel les données de fonctionnement (20A) comprennent des signaux de sortie du dispositif (10A), dans lequel les données de simulation (20B, 40-1-1, 40-2-1, ...., 40-K-N) comprennent des signaux de sortie du jumeau numérique (10B), et dans lequel chacun des signaux de sortie du jumeau numérique correspond à un signal de sortie respectif du dispositif ; et

dans lequel chacun des signaux de sortie du dispositif (10A) est mesuré par un capteur du dispositif qui est utilisé lors du fonctionnement prévu du dispositif.

12. Algorithme d'apprentissage automatique (60) de détection automatique d'un dysfonctionnement d'un dispositif (10A) dans l'industrie des denrées alimentaires ou l'industrie des boissons, en particulier pour une maintenance prévisionnelle, dans lequel l'algorithme d'apprentissage automatique est entraîné sur la base de données de simulation (20B ; 40-1-1, 40-2-1, ..., 40-K-N) et de classes de dommages prédéfinies (30-1, 30-2, ..., 30-K) d'un jumeau numérique (10B) du dispositif, dans lequel l'algorithme d'apprentissage automatique est configuré pour détecter un dysfonctionnement du dispositif sur la base de données de fonctionnement (20A) du dispositif.

FIG. 1

200

10B

Digitaler
Zwilling

reale
Vorrichtung

10A

20B

20A

Betriebsdaten

## FIG. 2

EP 4 000 018 B1

FIG. 3A

300B

10B

Digitaler
Zwilling

30-1
① Erhöhte Reibung

30-2
② Lagerschaden

② Erhöhte Reibung → Lagerschaden

30-3

20B

⓪ Normalbetrieb

Ausgangs-signal Sensor 1

310
t

30-1 ① Erhöhte Reibung

Ausgangs-signal Sensor 1

40-1-1
320
t

30-2 ② Lagerschaden

Ausgangs-signal Sensor 1

40-2-1
330
t

30-3 ③ Erhöhte Reibung ↓ Lagerschaden

Ausgangs-signal Sensor 1

40-3-1
340
t
$t=t_1$

FIG. 3B

(20B; 40-1-1, ..., 40-K-N)

400

| Simulationsdaten |
| Betriebsstörungen |

(30-1, ..., 30-K)

50

Maschinieller Lernalgorithmus

60

Tranierter maschineller Lernalgorithmus

FIG. 4

EP 4 000 018 B1

reale
Vorrichtung

20A          10A

60

Tranierter
maschineller
Lernalgorithmus

70

500

FIG. 5

600

Erzeugen von Simulationsdaten mittels digitalem Zwilling — 610

Trainieren eines maschinellen Lernalgorithmus auf den Simulationsdaten — 620

Erkennen einer Betriebsstörung basierend auf Betriebsdaten der Vorrichtung — 630

FIG. 6

700

720

721-1 ··· 721-N

Linien Layout

710
- Produkitonszeiten
- Wechseldauer
- Nachrüstzeit-Matr.
- Maschinenstundensatz
···

730
Rechentool

740
optimierter Produktionsplan

FIG. 7

EP 4 000 018 B1

800

```
┌──────────────────┐
│   Zerlegen des   │~ 820
│ Produktionsplans │
│   in Einheiten   │
└──────────────────┘
         │
         ▼
┌──────────────────┐
│     Anordnen     │~ 830
│       der        │
│     Einheiten    │
└──────────────────┘
         │
         ▼
┌──────────────────┐
│   Zuordnen der   │~ 850
│   Einheiten zu   │
│  Produktionslinien│
└──────────────────┘
         │
         ▼
┌──────────────────┐
│  Bestimmen einer │~ 860
│    Reihenfolge   │
│  für die Einheiten│
└──────────────────┘
```

810

840

FIG. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3428756 A1
- DE 102013208082 A1